# EUROPEAN PATENT APPLICATION

(11) **EP 4 202 376 A1**
(43) Date of publication of application: **28.06.2023**
(21) Application number: 22193306.2
(22) Date of filing: 20.08.2019
(51) Int. Cl.: G01F 1/00, G01F 1/84, G01F 23/296, G01N 9/00, G01N 11/00, G01C 19/56, G01N 29/02, G01F 1/002

(54) **STABILIZED MODE SPLITTING FIN SENSOR**

(62) Divisional of application: 19762560.1
(71) Applicant: Micro Motion Inc., Boulder, CO 80301 (US)
(72) Inventor: Schlosser, Martin Andrew, Boulder, 80303 (US); Schollenberger, Frederick Scott, Oakland, 94608 (US); Weinstein, Joel, Boulder, 80301 (US)
(74) Representative: Ellis, Christopher Paul

(57) **Abstract**

An embodiment of a fin sensor is disclosed. The embodiment of the fin sensor has a base, the base coupled to a first fin and a second fin, the fin sensor further having at least two transducers coupled to the fins, the first fin being coupled to the second fin by at least one fin coupler.

## Description

### TECHNICAL FIELD

The embodiments described below relate to sensors, more particularly, to flow sensors.

### BACKGROUND

Existing fin sensors have problems with generating mode separation. Typically, the frequency difference between modes that are in phase and modes that are out of phase is minimal, which confounds calculations of fluid flow characteristics. Also, when generating curling in existing fin sensors, there is little amplitude contrast from which to derive phase difference measurements that yield flow characteristics.

In existing fin sensors, measurements are confounded by significant net movement towards the sensor assembly from the center of the conduits in which they reside. The reason for this is that the axis of rotation of the fins is controlled by the fin position on the plate and the location of the driver. The rotation axis of the fins is typically about the edges of the base on which they reside. This generates imbalance which results in errors and problems with calibration. Forces from in-phase modes cause net motion at the process connection. Also, the tube and balance bar can be difficult or impossible to drive to equal, in-phase mode shapes. The generated imbalance can lead to calibration and measurement errors. These problems limit the effectiveness of fin sensors and make them impractical for many industrial applications.

Accordingly, there is a need for an improved fin sensor.

### SUMMARY

An embodiment of a fin sensor (102) is disclosed. The embodiment of the fin sensor (102) has a base (106), the base coupled to a first fin (108a) and a second fin (108b), the fin sensor (102) further having at least two transducers (104a and 104b) coupled to the fins (108a and 108b), the first fin (108a) being coupled to the second fin (108b) by at least one fin coupler (120a and/or 120b).

Another embodiment of a fin sensor (102) is disclosed. The another embodiment of the fin sensor (102) has a base (106) and a balance rib (118), the base (106) coupled to a first fin (108a) and a second fin (108b), the fin sensor (102) further having at least two transducers (104a and 104b) coupled to the fins (108a and 108b), the balance rib (118) being coupled to one or more of the base (106) and a base coupler (116).

An embodiment of a method of making a fin coupler assembly is disclosed. The embodiment of the method has a fin coupler assembly with at least one fin (108a and/or 108b) and at least one fin coupler (120a and/or 120b), the method comprising steps of forming a fin coupler assembly in which the at least one fin (108a and/or 108b) is coupled to the at least one fin coupler (120a and/or 120b).

An embodiment of a method of making a balanced base assembly is disclosed. The embodiment of a method of making a balanced base assembly includes steps of, forming a base (106), forming a balance rib (118), and coupling the balance rib (118) to one or more of the base (106) and a base coupler (116).

An embodiment of a method of using a fin sensor (102) is disclosed. The embodiment of a method of using a fin sensor (102), the fin sensor (102) has a driving transducer (104b) to drive vibrations in a first fin (108a) and a second fin (108b), the first and second fin (108a and 108b) coupled to a base (106), the fin sensor (102) having at least one sensing transducer (104a) to receive response data, the method having a step of at least partially restricting, by at least one fin coupler (120a and/or 120b), a motion of a first fin (108a) relative to a motion of a second fin (108b).

An embodiment of a method of using a fin sensor (102) is disclosed. The embodiment of a method of using a fin sensor (102) may have a fin sensor (102) with a driving transducer (104b) to drive vibrations in a first fin (108a) and a second fin (108b), the first fin (108a) and the second fin (108b) coupled to a base (106), the fin sensor (102) having at least one sensing transducer (104a) to receive response data, the fin sensor (102) having a balance rib (118), the method having a step of at least partially restricting, by the balance rib (118), the motion of the base (106).

### ASPECTS

According to an aspect, an embodiment of a fin sensor (102) is disclosed. The embodiment of the fin sensor (102) has a base (106), the base coupled to a first fin (108a) and a second fin (108b), the fin sensor (102) further having at least two transducers (104a and 104b) coupled to the fins (108a and 108b), the first fin (108a) being coupled to the second fin (108b) by at least one fin coupler (120a and/or 120b).

Preferably, the at least one fin coupler (120a and/or 120b) is a rod shaped fin coupler (220a).

Preferably, the at least one fin coupler (120a and/or 120b) is a brace bar (220c).

Preferably, the at least one fin coupler (120a and/or 120b) is a strip shaped fin coupler (220b).

Preferably, the strip shaped fin coupler (220b) has at least one tapered end.

Preferably, the strip shaped fin coupler (220b) is tapered such that the one or more of an upstream (143) end and a downstream (145) end of the strip shaped fin coupler (220b) have a smaller cross sectional area in a plane defined by a vertical axis (151) and a cross axis (131) than a cross sectional area in a plane defined by the vertical axis (151) and the cross axis (131) of a more central position along a flow axis (141) of the strip shaped fin coupler (220b).

Preferably, a cross section in a plane defined by the vertical and flow axes of the strip shaped fin coupler (220b) is narrower in a vertical axis (151) at one or more of an upstream (143) end and a downstream (145) end of the cross section than at least one central portion in a flow axis (141) between the upstream (143) end and the downstream (145) end of the cross section.

Preferably, the at least one fin coupler (120a and/or 120b) couples the fins (108a and 108b) at locations that are substantially the same on corresponding faces of the fins (108a and 108b).

Preferably, the fins are arranged to have the same placement such that the at least one fin coupler (120a and/or 120b) is parallel to a cross axis (131) when the fins (108a and 108b) are placed in the same or substantially the same position in a plane defined by a flow axis (141) and a vertical axis (151).

Preferably, the at least one fin coupler (120a and/or 120b) is coupled at different locations on each of the fins (108a and 108b).

Preferably, the at least one fin coupler (120a and/or 120b) is coupled to at least one of the fins (108a and/or 108b) in an area or projected area of a face of the at least one of the fins (108a and/or 108b) represented by a most downward (155) and a most upstream (143) quadrant portion of the at least one of the fins (108a and/or 108b).

Preferably, the at least one fin coupler (120a and/or 120b) is coupled to at least one of the fins (108a and/or 108b) in an area or projected area of a face of the at least one of the fins (108a and/or 108b) represented by a most downward (155) and a most downstream (145) quadrant portion of the at least one of the fins (108a and/or 108b).

Preferably, the at least one fin coupler (120a and/or 120b) is coupled to at least one of the fins (108a and/or 108b) in an area or projected area of a face of the at least one of the fins (108a and/or 108b) represented by a most downward (155) and a most upstream (143) corner of the at least one of the fins (108a and/or 108b).

Preferably, the at least one fin coupler (120a and/or 120b) is coupled to one or more of the fins (108a and/or 108b) in an area or projected area of a face of at least one of the fins (108a and/or 108b) represented by a most downward (155) and a most downstream (145) corner of at least one of the fins (108a and/or 108b).

Preferably, the at least one fin coupler (120a and/or 120b) is coupled to at least one of the fins (108a and/or 108b) in an area or projected area of a face of the at least one of the fins (108a and/or 108b) represented by a central one ninth portion of the at least one of the fins (108a and/or 108b).

Preferably, the at least one fin coupler (120a and/or 120b) is coupled to at least one of the fins (108a and/or 108b) in an area of a face of the at least one of the fins (108a and/or 108b) represented by an area or projected area defined by a middle one third portion in a vertical axis (151) and an upstream (143) one third portion of the at least one of the fins (108a and/or 108b).

Preferably, the at least one fin coupler (120a and/or 120b) is coupled to at least one of the fins (108a and/or 108b) in an area of a face of the at least one of the fins (108a and/or 108b) represented by an area or projected area defined by a middle one third portion in a vertical axis (151) and a downstream (145) one third portion of the at least one of the fins (108a and/or 108b).

Preferably, the at least one fin coupler (120a and/or 120b) is coupled to at least one of the fins (108a and/or 108b) in an area of a face of the at least one of the fins (108a and/or 108b) represented by an area or projected area defined by an upward (153) one third portion and upstream (143) one third portion of the at least one of the fins (108a and/or 108b).

Preferably, the at least one fin coupler (120a and/or 120b) is coupled to at least one of the fins (108a and/or 108b) in an area of a face of the at least one of the fins (108a and/or 108b) represented by an area or projected area defined by an upward (153) one third portion and downstream (145) one third portion of the at least one of the fins (108a and/or 108b).

Preferably, the at least one fin coupler (120a and/or 120b) is coupled to at least one of the fins (108a and/or 108b) in an area of a face of the at least one of the fins (108a and/or 108b) represented by an area or projected area defined by a downward (155) one third portion and an upstream (143) one third portion of the at least one of the fins (108a and/or 108b).

Preferably, the at least one fin coupler (120a and/or 120b) is coupled to at least one of the fins (108a and/or 108b) in an area of a face of the at least one of the fins (108a and/or 108b) represented by an area or projected area defined by a downward (155) one third portion in the vertical axis (151) and downstream (145) one third portion of at least one of the fins (108a and/or 108b).

Preferably, the at least one fin coupler (120a and/or 120b) is coupled to the first fin (108a) and the second fin (108b) in a manner that increases the axial stiffness of immersed elements of the fin sensor (102).

Preferably, the fins (108a and 108b) have fin protrusions (114a and 114b) that protrude through apertures in the base (106), the transducers (104a and 104b) being coupled to the fins (108a and 108b) at the fin protrusions (114a and 114b).

Preferably, the base (106) has an immersion side (342) and an external side (344), the fin protrusions (114a and 114b) protruding through the base (106) to the external side (344).

Preferably, the fin protrusions (114a and 114b) have corresponding segments, wherein corresponding segments are segments that at least partially align in a cross axis (131).

Preferably, the transducers (104a and 104b) are each coupled to two corresponding segments.

Preferably, the at least one fin coupler (120a and/or 120b) is coupled to the fins (108a and 108b) on an external side of the base (106).

Preferably, the at least one fin coupler (120a and/or 120b) is coupled to at least one fin protrusion (114a or 114b) of the fin protrusions (114a or 114b).

Preferably, the at least one fin coupler (120a and/or 120b) is coupled to a segment of the at least one fin protrusion (114a or 114b).

Preferably, the at least one fin coupler (120a and/or 120b) is coupled to the fins (108a and 108b) at a position downward (155) of a coupling between the fins (108a and 108b) and the at least two transducers (104a and 104b).

Preferably, the at least one fin coupler (120a and/or 120b) is coupled to the fins (108a and 108b) on an external side (344) of the base (106) at a position closer to the base (106) than a location on the fins (108a and/or 108b) at which the transducers (104a-c) are coupled.

Preferably, the at least one fin coupler (120a and/or 120b) is coupled to the fins (108a and 108b) on the external side (344) of the base (106) at a position closer to a location on the fins (108a and/or 108b) at which the transducers (104a-c) are coupled than to the base (106).

Preferably, the fin protrusions (114a and 114b) have corresponding segments, wherein corresponding segments are segments that at least partially align in a cross axis (131).

Preferably, the transducers (104a and 104b) are each coupled to two corresponding segments.

Preferably, the at least one fin coupler (120a and/or 120b) including a first fin coupler (120a) and a second fin coupler (120b), the first fin coupler (120a) coupled to the fins (108a and 108b) at a location upstream of a location at which the second fin coupler (120b) is coupled to the fins (108a and 108b).

Preferably, the sensing transducer (104a) is coupled to the fins (108a and 108b) upstream of where the driving transducer (104b) is coupled to the fins (108a and 108b).

Preferably, the base (106) being a varying base (306) that has varying hardness.

Preferably, the varying base (306) has a softer portion in a middle of the varying base (306) and harder portions on edges of the varying base (306), the middle and the edges being the middle and edges of the varying base (306) in a cross axis (131).

Preferably, the varying base (306) is thinner in the middle than on the edges.

Preferably, the varying base (306) has varying material composition along the cross axis (131).

Preferably, the varying base (306) has softer material in the middle of the varying base (306) and harder material on the edges of the varying base (306) in the cross axis (131).

Preferably, the fin sensor (102) further comprises a balance rib (118) that is coupled to one or more of the base (106) and a base coupler (116), the balance rib (118) being configured to at least partially restrict motion of the base (106) in a vertical axis (151) along a middle portion of the base (106), the middle portion of the base (106) being a portion defined by the middle of a cross axis (131).

Preferably, the fin sensor (102) further comprises a meter electronics (112), one of the at least two transducers (104a and 104b) being a driving transducer (104b), the meter electronics (112) configured to transmit data representing commands to the driving transducer (104b) to drive the fins (108a and 108b) in one or more of an in-phase (IP) mode and an out-of-phase (OOP) mode.

Preferably, another of the at least two transducers (104a and 104b) is a sensing transducer (104a), the meter electronics (112) receiving signal data from the sensing transducer (104a) to maintain drive modes using a controlled feed-back loop.

Preferably, one or more of at least one of the at least one fin coupler (120a and/or 120b) and at least one of the fins (108a and/or 108b) having a coupling element, the coupling element configured to couple the at least one of the at least one fin coupler (120a and 120b) to the at least one of the fins (108a and/or 108b) via the coupling element.

Preferably, the first fin coupler (120a) has a coupling element, and the first fin (108a) has another coupling element (120b), wherein the coupling element is complementary to the another coupling element such that the coupling element is configured to couple to the another coupling element.

Preferably, the coupling element is a recess in the first fin (108a).

Preferably, the at least one fin coupler (120a and/or 120b) is an element of neither the base (106) nor any of the at least two transducers (104a-c).

Preferably, the at least one fin coupler (120a and/or 120b) influences the motion of the fins (108a and 108b) differently from the manner in which the base (106) influences the motion of the fins (108a and 108b) and from the manner in which the at least two transducers (104a-c) influence the motion of the fins (108a and 108b).

Preferably, the at least one fin coupler (120a and/or 120b) is coupled to neither the base (106) nor any of the at least two transducers (104a-c).

According to an aspect, another embodiment of a fin sensor (102) is disclosed. The another embodiment of the fin sensor (102) has a base (106) and a balance rib (118), the base (106) coupled to a first fin (108a) and a second fin (108b), the fin sensor (102) further having at least two transducers (104a and 104b) coupled to the fins (108a and 108b), the balance rib (118) being coupled to one or more of the base (106) and a base coupler (116).

Preferably, the balance rib (118) is configured to at least partially restrict motion of the base (106) in a vertical axis (151) along a middle portion of the base (106), the middle portion of the base (106) being a portion defined by the middle of a cross axis (131).

Preferably, the balance rib (118) is coupled to the base (106) at the middle portion of the base (106).

Preferably, the balance rib (118) is coupled to the middle portion of the base coupler (116).

Preferably, the balance rib (118) is configured to at least partially prevent net motion of the fins (108a and 108b) in a vertical axis (151).

Preferably, the balance rib (118) is coupled to the base (106) between the first fin (108a) and the second fin (108b).

Preferably, the balance rib (118) is coupled to the base (106) at a position between a position on the base (106) at which the first fin (108a) is coupled or is to be coupled and a different position on the base (106) at which the second fin (108b) is coupled or is to be coupled, on the cross axis (131).

Preferably, the balance rib (118) is coupled equidistant from the position and the different position on the cross axis (131).

Preferably, the balance rib (118) is coupled to the base (106) such that a centerline (198) of the balance rib (118) is parallel to a flow axis (141).

Preferably, the balance rib (118) is symmetrical, in at least one axis, about a centerline (198).

Preferably, the balance rib (118) has a thickness in the cross axis (131) of the balance rib (118) on one or more of a downstream (145) end of the balance rib (118) and an upstream (143) end of the balance rib (118) that is less than a thickness in the cross axis (131) of a middle portion of the balance rib (118).

Preferably, the balance rib (118) has a thickness in the cross axis (131) of the balance rib (118) on one or more of a downstream (145) end of the balance rib (118) and an upstream (143) end of the balance rib (118) that is greater than a thickness in the cross axis (131) of a middle portion of the balance rib (118).

Preferably, the fin sensor (102) further comprises at least one fin coupler (120a and/or 120b), the at least one fin coupler (120a and/or 120b) coupled to the fins (108a and 108b).

Preferably, the base (106) is a varying base (306) that has varying hardness.

Preferably, the varying base (306) has a softer portion in a middle of the varying base (306) and harder portions on edges of the varying base (306), the middle and the edges being the middle and edges of the varying base (306) in a cross axis (131).

Preferably, the varying base (306) is thinner in a middle of the varying base (306) than on edges of the varying base (306) along a cross axis (131).

Preferably, the varying base (306) has varying material composition along the cross axis (131).

Preferably, the varying base (306) has softer material in a middle and harder material on edges along the cross axis (131).

Preferably, a portion of the varying base (306) between the fins (108a and 108b) along the cross axis (131) is softer than the portions of the varying base (306) between each of the fins (108a and 108b) and the edges of the varying base (306) in the cross axis (131).

Preferably, the softer portion (314) and the harder portions (310 and 312) may be formed by coupling at least one of the fins (108a and 108b) closer in the cross axis (131) to an edge of the varying base (106) than to the balance rib (118).

According to an aspect, an embodiment of a method of making a fin coupler assembly is disclosed. The embodiment of the method has a fin coupler assembly with at least one fin (108a and/or 108b) and at least one fin coupler (120a and/or 120b), the method comprising steps of forming a fin coupler assembly in which the at least one fin (108a and/or 108b) is coupled to the at least one fin coupler (120a and/or 120b).

Preferably, the coupling assembly is formed by molding, such that the at least one fin coupler (120a and/or 120b) is formed already coupled to the at least one fin (120a and/or 120b).

Preferably, the forming a fin coupler assembly includes forming a fin coupler (120a), wherein the fin coupler (120a) is different from a base (106) and a transducer (104a-c).

Preferably, the forming a fin coupler assembly further includes forming a fin (108a) of the at least one fin (108a and/or 108b) and coupling a fin coupler (120a) of the at least one fin coupler (120a and/or 120b) to the fin (108a).

Preferably, the coupling the fin coupler (120a) to the fin (108a) comprises coupling the fin coupler (120a) to the fin (108a) at a position closer to a free edge (199) of the fin (108a) than a position of the fin (108a) that is coupled or is to be coupled to a base (106).

Preferably, the method further includes coupling a first fin coupler (120a) of the at least one fin coupler (120a and/or 120b) to both of the fins (108a and 108b) and coupling a second fin coupler (120b) of the at least one fin coupler (120a and/or 120b) to both of the fins (108a and 108b), wherein the first fin coupler (120a) is coupled at least one position that is or will be at a different point along a flow axis (141) of at least one position at which the second fin coupler (120b) is coupled.

Preferably, the forming a fin coupler assembly comprises forming one or more of the at least one fin (108a and/or 108b) and the at least one fin coupler (120a and/or 120b) with a coupling element configured to facilitate a coupling between the at least one fin (108a and/or 108b) and the at least one fin coupler (120a and/or 120b).

Preferably, the at least one fin (108a and/or 108b) is coupled to the at least one fin coupler (120a and/or 120b) on a portion of the at least one fin coupler (120a and/or120b) that resides or will reside on an immersion side (342) of a base (106).

Preferably, the at least one fin (108a and/or 108b) is coupled to the at least one fin coupler (120a and/or 120b) on a portion of the at least on fin coupler (120a and/or120b) that resides or will reside on an external side (344) of the base (106).

Preferably, the method further includes forming a balance rib (118) and coupling the balance rib (118) to one or more of the base (106) and a base coupler (116).

Preferably, the base (106) is formed as a varying base (306) with varying hardness.

Preferably, the at least one fin coupler (120a and/or 120b) is formed as a rod shaped fin coupler (220a).

Preferably, the at least one fin coupler (120a and/or 120b) is formed as a brace bar (220c).

Preferably, the at least one fin coupler (120a and/or 120b) is formed as a strip shaped fin coupler (220b).

Preferably, the method further includes forming a base (106) and coupling the base (106) to the fins (108a and 108b).

Preferably, the fins (108a and 108b) are formed having fin protrusions (114a and 114b) that protrude through apertures in the base (106), at least one transducer (104a and/or 104b) being coupled to the fins (108a and 108b) at the fin protrusions (114a and 114b).

Preferably, the fin protrusions (114a and 114b) are formed with corresponding segments, wherein corresponding segments are segments that at least partially align in a cross axis (131), the at least one fin coupler (120a and/or 120b) coupled to the fins (108a and 108b) at the corresponding segments.

Preferably, the base (106) is formed as a varying base (306) with varying hardness.

Preferably, the varying base (306) is formed as softer in a middle portion of a varying base (306) than edges of the varying base (306) in a cross axis (131).

Preferably, the method further includes coupling the balance rib (118) to one or more of the base (106) and a base coupler (116).

Preferably, the at least one fin coupler (120a and/or 120b) is coupled to the fins (108a and 108b) in at least one location in a first direction (133) from the balance rib (118) and in at least one location in a second direction (135) of the balance rib (118).

Preferably, the method further includes forming a meter electronics (112) and communicatively coupling the meter electronics (112) to transducers (104a and/or 104b and/or 104c), the meter electronics (112) having a processor and memory, the memory configured to store commands and data for the processor to execute operations and configuring the meter electronics (112) to drive in in-phase and out-of-phase modes.

According to an aspect, an embodiment of a method of making a balanced base assembly is disclosed. The embodiment of a method of making a balanced base assembly includes steps of, forming a base (106), forming a balance rib (118), and coupling the balance rib (118) to one or more of the base (106) and a base coupler (116).

Preferably, the base (106) is formed as a varying base (306).

Preferably, the varying base (306) is formed by varying a thickness of the varying base (306) in molding or by cutting away a portion of the varying base (306).

Preferably, the thickness is varied such that a middle of the varying base (306) is thinner than the edges of the varying base (306) in a cross axis (131).

Preferably, the varying base (306) is formed by varying the material from which the varying base (306) is composed, at least along a cross axis (131).

Preferably, the varying the material comprises composing the at least part of the varying base (306) of a material in the middle of the varying base (306) that is softer than the material at the edges of the varying base (306) on the cross axis (131).

Preferably, the forming the balance rib (118) comprises forming the balance rib (118) as an elongate member.

Preferably, the coupling the balance rib (118) to the base (106) comprises coupling the balance rib (118) to the base (106) at a position in the middle of the base (106) on a cross axis (131).

Preferably, the coupling the balance rib (118) to the base (106) comprises coupling the balance rib (118) to the base (106) at a position between a position on the base (106) at which a first fin (108a) is coupled or is to be coupled and a different position on the base (106) at which a second fin (108b) is coupled or is to be coupled, the position and the different position on a cross axis (131).

Preferably, the coupling the balance rib (118) to the base (106) at a position between a position on the base (106) at which a first fin (108a) is coupled or is to be coupled and a different position on the base (106) at which a second fin (108b) is coupled or is to be coupled on a cross axis (131) comprises coupling the balance rib (118) equidistant from the position and the different position on the cross axis (131).

Preferably, the coupling the balance rib (118) to the base (106) comprises coupling the balance rib (118) to the base (106) with a centerline (198) of the balance rib (118) parallel to a flow axis (141).

Preferably, the forming the balance rib (118) comprises forming the balance rib (118) such that the balance rib (118) is symmetrical, in at least one axis, about a centerline (198).

Preferably, the forming the balance rib (118) further comprises forming the balance rib (118) such that a thickness in the cross axis (131) of the balance rib (118) on one or more of a downstream (145) end of the balance rib (118) and an upstream (143) end of the balance rib (118) is less than a thickness in the cross axis (131) of a middle portion of the balance rib (118) in a flow axis (141).

Preferably, the forming the balance rib (118) further comprises forming the balance rib (118) such that a thickness in the cross axis (131) of the balance rib (118) on one or more of a downstream (145) end of the balance rib (118) and an upstream (143) end of the balance rib (118) is greater than a thickness in the cross axis (131) of a middle portion of the balance rib (118) in a flow axis (141).

Preferably, the method further includes forming fins (108a and 108b) and coupling the fins (108a and 108b) to the base (106).

Preferably, the method further includes forming at least one fin coupler (120a and/or 120b) and coupling the at least one fin coupler (120a and/or 120b) to the fins (108a and 108b).

Preferably, the at least one fin coupler (120a and/or 120b) is coupled to a first of the fins (120a) in a first direction (133) from the balance rib (118) and the at least one fin coupler (120a and/or 120b) is coupled to a second of the fins (120b) in a second direction (135) from the balance rib (118).

Preferably, at least one of the fins (108a and/or 108b) is coupled to the base (106) at a position that is in a first direction (133) from the balance rib (118), and the position is closer to an edge of the base (106) that is in a first direction (133) from the balance rib (118) than to the balance rib (118), in a cross axis (131).

Preferably, at least one of the fins (108a and/or 108b) is coupled to the base (106) at a position that is in a first direction (133) from the balance rib (118), and the position is further from an edge of the base (106) that is in a first direction (133) from the balance rib (118) than from the balance rib (118), in a cross axis (131).

Preferably, the method further includes forming a meter electronics (112) and communicatively coupling the meter electronics (112) to transducers (104a and/or 104b and/or 104c), the meter electronics (112) having a processor and memory, the memory configured to store commands and data for the processor to execute operations and configuring the meter electronics (112) to drive the fins (108a and 108b) in in-phase and out-of-phase modes.

According to an aspect, an embodiment of a method of using a fin sensor (102) is disclosed. The embodiment of a method of using a fin sensor (102), the fin sensor (102) has a driving transducer (104b) to drive vibrations in a first fin (108a) and a second fin (108b), the first and second fin (108a and 108b) coupled to a base (106), the fin sensor (102) having at least one sensing transducer (104a) to receive response data, the method having a step of at least partially restricting, by at least one fin coupler (120a and/or 120b), a motion of a first fin (108a) relative to a motion of a second fin (108b).

Preferably, the at least partially restricting by at least one fin coupler (120a and/or 120b), a motion of a first fin (108a) relative to a motion of a second fin (108b) includes at least partially restricting the motion of a free edge (199) of a first fin (108a) relative to a free edge (199) of a second fin (108b).

Preferably, the vibrations are driven by the driving transducer (104b) to drive the fins (108a and 108b) in an out-of-phase (OOP) mode.

Preferably, the out-of-phase (OOP) mode represents a phase separation between the motion of the first fin (108a) and the second fin (108b) of about 180°.

Preferably, the at least partially restricting, by the at least one fin coupler (120a and/or 120b), a motion of a first fin (108a) relative to a motion of a second fin (108b) comprises at least partially restricting the motion of the first fin (108a) at any site at which the at least one fin coupler (120a and/or 120b) is coupled to the first fin (108a) relative to the motion of the second fin (108b).

Preferably, the at least one fin coupler (120a and/or 120b) does not directly restrict the movement of any element of the base (106), the at least one fin coupler (120a and/or 120b) not being coupled to or an element of the base (106).

Preferably, the method further includes at least partially restricting the motion of the base (106) with a balance rib (118).

According to an aspect, an embodiment of a method of using a fin sensor (102) is disclosed. The embodiment of a method of using a fin sensor (102) may have a fin sensor (102) with a driving transducer (104b) to drive vibrations in a first fin (108a) and a second fin (108b), the first fin (108a) and the second fin (108b) coupled to a base (106), the fin sensor (102) having at least one sensing transducer (104a) to receive response data, the fin sensor (102) having a balance rib (118), the method having a step of at least partially restricting, by the balance rib (118), the motion of the base (106).

Preferably, the at least partially restricting, by the balance rib (118), the motion of the base (106) includes at least partially restricting a motion of the base (106) in a vertical axis (151) along a middle portion of the base (106), the middle portion being a portion defined by the middle of a cross axis (131).

Preferably, the at least partially restricting, by the balance rib (118), the motion of the base (106) includes at least partially preventing a net motion of the fins (108a and 108b) in a vertical axis (151).

Preferably, the at least partially restricting, by the balance rib (118), the motion of the base (106) includes at least partially preventing a net motion of the fin sensor (102) in a vertical axis (151).

Preferably, the at least partially restricting the motion of the base (106) includes at least partially restricting the base (106) at a position between a position on the base (106) at which the first fin (108a) is coupled or is to be coupled and a different position on the base (106) at which the second fin (108b) is coupled or is to be coupled, on the cross axis (131).

Preferably, the at least partially restricting the motion of the base (106) includes at least partially restricting the motion of the base (106) at a position equidistant from the position and the different position on the cross axis (131).

Preferably, the at least partially restricting the motion of the base (106) comprising at least partially restricting the motion of the base (106) at least along a linear portion of the base (106) that is parallel to a flow axis (141).

Preferably, the at least partially restricting the motion of the base (106) includes at least partially restricting the motion of the base (106) such that movement of one or more of a downstream (145) end of the base (106) and an upstream (143) end of the base (106) is restricted less than a middle of the base (106), the middle of the base (106) being the middle of the base (106) in the flow axis (141).

Preferably, the at least partially restricting the motion of the base (106) includes at least partially restricting the motion of the base (106) such that movement of one or more of a downstream (145) end of the base (106) and an upstream (143) end of the base (106) is restricted more than a middle of the base (106), the middle of the base (106) being the middle of the base (106) in the flow axis (141).

### BRIEF DESCRIPTION OF THE DRAWINGS

The same reference number represents the same element on all drawings. It should be understood that the drawings are not necessarily to scale.
FIG. 1 shows a perspective view of an embodiment of a flow sensor system 100 with a fin-type sensor.
FIG. 2A shows a perspective view of an embodiment of a fin coupler assembly 200a with a rod shaped fin coupler 220a.
FIG. 2B shows a perspective view of an embodiment of a fin coupler assembly 200b with a strip shaped fin coupler 220b.
FIG. 2C shows a perspective view of an embodiment of a fin coupler assembly 200c with a brace bar shaped fin coupler 220c.
FIG. 3 is a cross-sectional view of an embodiment of a flow sensor system 300 with a fin sensor 302 having a varying base 306 in a balanced base assembly.
FIG. 4 shows a block diagram of an embodiment of a computer system 400. In an embodiment, the computer system 400 may be a meter electronics, for instance, the meter electronics 112.
FIG. 5 shows a flowchart of an embodiment of a method 500 for using a fin coupler assembly of a fin sensor 102.
FIG. 6 shows a flowchart of an embodiment of a method 600 for using a balanced base assembly of a fin sensor 102.
FIG. 7 shows a flowchart of an embodiment of a method 700 of making a fin coupler assembly of a fin sensor 102.
FIG. 8 shows a flowchart of an embodiment of a method 800 of making a balanced base assembly of a fin sensor 102.
FIG. 9 shows a flowchart of an embodiment of a method 900 of making a balanced base and fin coupler assembly of a fin sensor 102.
FIG. 10 shows a comparison 1000 of embodiments of fin sensor 102 with and without fin couplers 120a and 120b on the immersion side 342 of a base 106 driven in In-Phase (IP) modes and Out-Of-Phase (OOP) modes.
FIG. 11 shows a comparison 1100 of embodiments of fin sensor 102 with and without a balance rib 118 in undeformed and deformed positions.
FIG. 12 shows a comparison 1200 of embodiments of fin sensor 102 with and without fin couplers 120a and 120b on the external side 344 of a base 106 driven in In-Phase (IP) modes and Out-Of-Phase (OOP) modes.

### DETAILED DESCRIPTION

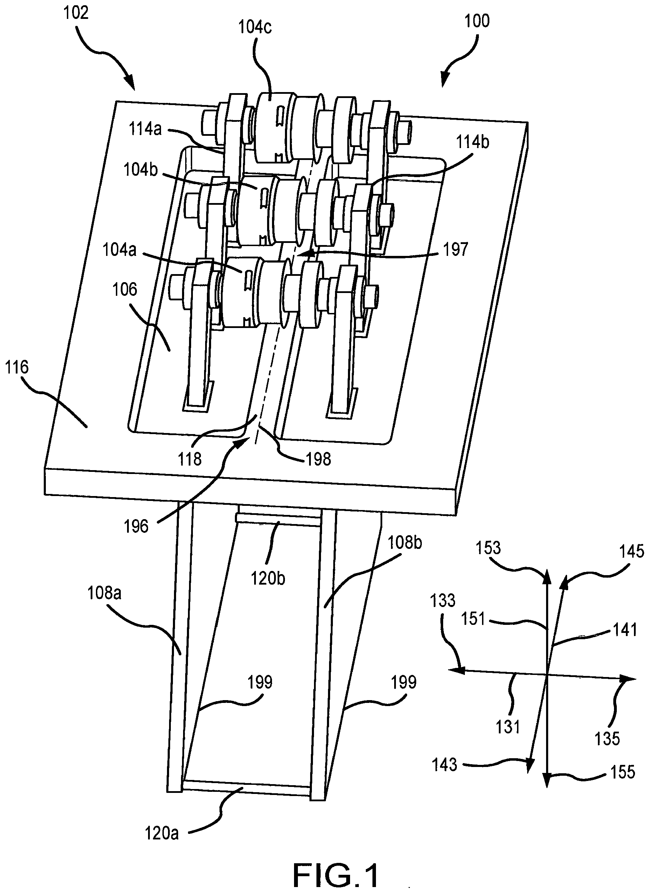

FIGS. 1-12 and the following description depict specific examples to teach those skilled in the art how to make and use the best mode of embodiments of fin coupler assemblies and balanced base assemblies for fin sensors. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of fin coupler assemblies and balanced base assemblies for fin sensors. As a result, the embodiments described below are not limited to the specific examples described below, but only by the claims and their equivalents.

FIG. 1 shows a perspective view of an embodiment of a flow sensor system 100 with a fin-type sensor. The system 100 has a fin sensor 102 with an upstream transducer 104a, a driving transducer 104b, a downstream transducer 104c, a base 106, a first fin 108a, a second fin 108b, a conduit 110 (not shown), meter electronics 112 (not shown), a first fin protrusion 114a, a second fin protrusion 114b, a base coupler 116, a balance rib 118, a first fin coupler 120a, a second fin coupler 120b, a cross axis 131 having a first direction 133 and a second direction 135, a flow axis 141 having an upstream direction 143 and a downstream direction 145, and a vertical axis 151 having an upward direction 153, a downward direction 155, a terminal end of the balance rib 196, a middle portion of the balance rib 197, a centerline of the balance rib 198, and free edges 199. The images in FIGs. 1-4 and FIGs. 10-12 may not be to scale with respect to various embodiments of the system 100.

The flow system 100 may determine flow properties using the fin sensor 102. For instance, the fin sensor 102 may drive elements of the fin sensor 102, using a transducer to drive vibrations in elements of the fin sensor 102. The transducers may be any type of driving device or pickoff device, for instance, a piezo device or a magnet and coil arrangement. Any, some, or all of the transducers may measure differences in phase or time of signals measured by transducers in order to determine flow characteristics, for instance, to determine mass flow rates. In an embodiment, the fin sensor 102 is a Coriolis flow sensor which uses the transducer arrangements that may rely on the Coriolis forces over elements in the fin sensor 102 to generate these flow rates. The phase differences or time delays may be generated by driving elements and measuring elements, for instance, by vibrating the base and measuring the response in the transducers, by vibrating fins and measuring the response at the fins, or by comparing the signal used to generate the vibration (drive signal) with a response at the fins. Flowrate measurements may be generated from phase differences and/or frequency response signals taken by transducers 104a-c. The fin sensor 102 may be used to generate density measurements by determining frequencies of oscillations, and using methods known in the art to determine densities from those frequencies. For instance, density measurements may be generated from frequency response signals taken by the transducers 104a-c. Viscosity measurements may be derived in the fin sensor 102 from transducer measured phase differences or time delays, for instance, based on two off-resonance frequency driven phase differences, perhaps derived. The flowrate, density, and viscosity measurement methods for vibratory meters are all well-established in the art. The fins may be coupled at particular locations using fin couplers. In various embodiments, the fin sensor 102 may be one or more of a Coriolis flow meter, a fin meter, or a fork meter (perhaps with either fins or tines).

Fin couplers 120a and 120b may be used to enhance mode splitting between in phase (hereinafter, "IP") modes and out of phase (hereinafter, "OOP") modes. In an embodiment, an OOP mode may be a mode in which the first fin 108a and the second fin 108b are vibrated with a phase difference that is or is about 180 degrees from the other. Further, the fin couplers may introduce more curl motion to enhance the sensitivity of the fin sensor 102 measurements. In embodiments, the base 106 may be a plate with a thin middle portion and thick outer portion along a cross axis 131. The base 106 may also have a balance rib 118 to control flexure and may limit net motion of the fin sensor 102 in a vertical axis 151 relative to the conduit to which the base is coupled.

In an embodiment, the fin sensor 102 may have two fins, a first fin 108a and a second fin 108b. The first fin 108a and second fin 108b are fins that are at least partially immersed in a flow fluid during operation of the fin sensor 102. Embodiments are contemplated in which more fins are used. For instance, embodiments having 3, 4, 5, 6, 7, 8, 9, 10, 11, 12, 13, 14, 15, 16, or more fins are contemplated. In other embodiments, tines may be used instead of fins, with the tines having some or all of the same properties and arrangements of the fins 108a and 108b disclosed in this specification. When the specification refers to fins, the specification also contemplates embodiments in which tines are used.

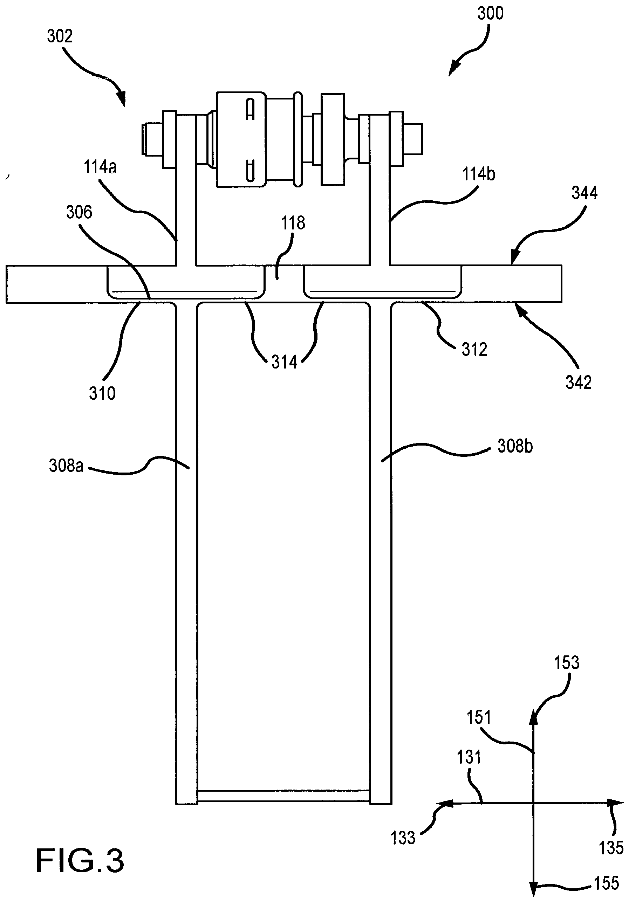

The fins 108a and 108b may be arranged in parallel to one another and may be arranged with their lengths parallel to or substantially parallel to the anticipated path of fluid flow in a conduit. The fins 108a and 108b may be arranged such that they have portions that extend through the base 106, the fins 108a and 108b perhaps having fin protrusions 114a and 114b on the side of the base 106 (external side 344 of FIG. 3) that does not have the portions of the fins 108a and 108b that are to be immersed in a flow fluid (the side with the immersed elements is the immersion side 342, shown in FIG. 3).

The fins 108a and 108b may have free edges 199, a free edge 199 perhaps defined as the downward 155 most edge of the fins. Fin couplers (e.g. fin couplers 120a and 120b) may be used to restrict the motion of a free edge 199 of a first fin 108a relative to a coupled second fin 108b, perhaps by coupling part of the free edge 199 of the first fin 108a to part of the free edge 199 of the second fin 108b or perhaps by coupling other parts of the fins 108a and 108b.

The fins 108a and 108b may be coupled to one another using one or more fin couplers. The fin couplers 120a and 120b are elements that couple motion of fins 108a and 108b at particular locations on the fins 108a and 108b. For purposes of this specification, a first fin coupler 120a is shown as an upstream 143 fin coupler relative to a second fin coupler 120b. In various embodiments, any number of fin couplers may be used to couple adjacent fins and/or non-adjacent fins. For instance, the couplers that couple each set of coupled fins may be 1, 2, 3, 4, 5, 6, 7, 8, 9, 10, 11, 12, 13, 14, 15, 16 and any other number of couplers 120a and 120b. In various embodiments, a certain number of fins may be coupled and a certain number of fins may be not coupled, for instance, all of the fins, three quarters of the fins, two thirds of the fins, half of the fins, a quarter of the fins, a third of the fins, an eighth of the fins, a tenth of the fins, or the like ratio of fins may be coupled.

In an embodiment, one, a combination, or all of the fins 108a and 108b may extend or substantially extend the entire length of the base 106. For instance, substantially in this context may mean that the fins do not extend to a portion of the base 106 that is used to couple the base to the conduit or a portion of the base just adjacent to the portion of the base 106 that is coupled to the conduit 110 and/or base coupler 116.

The conduit 110 is a conduit through which fluid may flow. Any type of conduit known in the art may be used. The conduit 110 is not shown in FIG. 1, but flow conduits and the manners in which flow sensors, for instance, fin sensor 102, are coupled to conduits are well-known in the art of flow sensors.

The fin couplers 120a and 120b may couple the fins 108a and 108b at any number of locations between the fins. For instance, the fin couplers 120a and 120b may couple the fins 108a and 108b at locations that are substantially the same on corresponding faces of the fins 108a and 108b, perhaps with the fins arranged to have the same placement such that the fin couplers 120a and 120b are parallel or substantially parallel to the cross axis 131 when the fins 108a and 108b are placed in the same position in a plane defined by the flow and vertical axes 141 and 151 (for instance, if the fins have the same shape and size) or the fin couplers 120a and 120b may be coupled at different locations on each of the respective fins 108a and 108b. The fin couplers 120a and 120b may be coupled to one or more of the fins 108a and 108b at one, a combination, or all of a position in an area of at least one of the fins 108a and 108b represented by the most downward 155 and upstream 143 quadrant portion of at least one of the fins 108a and 108b (the quadrant perhaps not including the center position of the at least one of the at least one of the fins 108a and 108b), a most downward 155 and downstream 145 quadrant portion of at least one of the fins 108a and 108b (the quadrant perhaps not including the center position of at least one of at least one of the fins 108a and 108b), the most downward 155 and upstream 143 corner of at least one of the fins 108a and 108b, the most downward 155 and downstream 145 corner of at least one of the fins 108a and 108b, a central one ninth area portion of at least one of the fins 108a and 108b, an area defined by a middle one third area portion in the vertical axis 151 and upstream 143 one third portion of at least one of the fins 108a and 108b, an area defined by a middle one third portion in the vertical axis 151 and downstream 145 one third portion of at least one of the fins 108a and 108b, an area defined by an upward 153 one third portion in the vertical axis 151 and upstream 143 one third portion of at least one of the fins 108a and 108b, an area defined by an upward 153 one third portion in the vertical axis 151 and downstream 145 one third portion of at least one of the fins 108a and 108b, an area defined by a downward 155 one third portion in the vertical axis 151 and upstream 143 one third portion of at least one of the fins 108a and 108b, an area defined by a downward 155 one third portion in the vertical axis 151 and downstream 145 one third portion of at least one of the fins 108a and 108b, and/or the like.

Embodiments are contemplated in which the faces of the fins do not have planar surfaces. In this instance, the areas stated in the prior paragraph may represent projections from those relative areas of a largest fin cross section in any plane defined by the flow and vertical axes 141 and 151, the relevant areas projected to areas of the face of a fin (e.g. an interior face of 108a) that faces the interior face of another fin (e.g. an interior face of 108b), projected along lines in the cross axis. For the purposes of the claims, these are referred to as "projected areas."

The fin couplers 120a and 120b may be of different shapes and confirmations. For instance, one or more of the fin couplers 120a and 120b may be, for instance, rod shaped or cylindrical, brace bars, beams (perhaps with cross sections with respect to a plane defined by the flow and vertical axes 141 and 151 of a square, a circle, a triangle, other polygonal shape, elliptical, and/or the like, when there is no flow), strips with flat areas (that are either flat or substantially flat with respect to the plane defined by the flow and vertical axes 141 and 151 or are flat with respect to the plane defined by the vertical and cross axes 151 and 131, when there is no flow), helixes, and/or the like. Combinations of different shapes of fin couplers 120a and/or 120b are contemplated by this specification, for instance, the fin sensor 102 may have an upstream fin coupler 120a that is a rod and a downstream fin coupler 120b that is represented by one or more brace bars. These are merely exemplary, and all combinations of shapes and confirmations are contemplated by the specification.

The fin couplers 120a and 120b may be composed of any number of materials and may be of materials different from one, any combination, or all of the conduit 110, the base 106, the transducers 104a-c, the fins 108a and 108b, and/or portions of the fins 108a and 108b at which the fin couplers 120a and/or 120b are coupled. The fin couplers 120a and 120b may be composed of the same materials throughout the fin sensor 102 or may have different compositions between them.

One or more of the fin couplers 120a and 120b may be made of a flexible material, to allow for some flexure and mode flexibility in the one or more of the fin couplers 120a and 120b, perhaps enhancing flexibility of motion of one or more of the fins 108a and 108b or one or more of the fin couplers 120a and 120b in some modes over other modes. One or more of the fin couplers 120a and 120b may be made of a rigid material, to limit flexure and mode flexibility in the one or more of the fin couplers 120a and 120b, perhaps enhancing flexibility of motion of one or more of the fins 108a and 108b or one or more of the fin couplers 120a and 120b in some modes over other modes. The fin couplers 120a and 120b may be assembled with the fins 108a and 108b, the assemblies referred to in this specification as fin coupler assemblies.

The fin couplers 120a and 120b may increase curling of the fins 108a and 108b when the fins 120a and 120b are driven in an out-of-phase mode. The fin couplers 120a and 120b may increase axial stiffness which may result in the increased curling. The increased curling may allow the fin sensor 102 to better couple the fins to the flowing medium and induce Coriolis responses, perhaps similar to typical Coriolis mass flowmeters, fork meters or fin meters. Also, the curl generated in the fins 108a and 108b by the inclusion of fin couplers 120a and 120b in the out-of-phase mode may provide a different, potentially higher, frequency than a similarly driven fin sensor 102 in an in-phase mode, potentially creating mode separation. The axial stiffness provided by the fin couplers 120a and 120b may also cause the free edge 199 tips of the fins 108a and 108b to be stationary, substantially stationary, or at least limit the mobility of the free edges of the fins 108a and 108b relative to the mobility the fins 108a and 108b would have if the fins 108a and 108b were not coupled by fin couplers 120a and 120b, likely reducing their drag in the flowing medium and possibly inducing fewer effects on the fluid-structure interaction.

The fin couplers 120a and 120b should be understood as functional elements that function separately of the base 106 and the transducers 104a-c. The fin couplers 120a and 120b may be separate from the base 106 and the transducers 104a-c, and the fin couplers 120a and 120b may be elements that are not coupled to one or more of the transducers 104a-c and the base 106 (perhaps not coupled to either). In this arrangement, the fin couplers 120a and 120b may influence the motion of the fins 108a and 108b differently from the manner in which the base 106 and the transducers 104a-c influence the motion of the fins 108a and 108b.

For the purposes of this specification, a fin coupler assembly is an assembly in which at least one fin (108a and/or 108b) is coupled to at least one fin coupler (120a and/or 120b). Embodiments are contemplated in which more fin couplers and fins are coupled. For instance, in an embodiment, the fin coupler assembly has two fins (108a and 108b) coupled by, for instance, two (120a and 120b, as shown), three, four, five, six, or more fin couplers. In further embodiments, the fin coupler assemblies may have coupling elements that are used to couple the fins to the fin couplers. These coupling elements may be formed as components of either or both of the fins and/or the fin couplers, or the entire fin coupler assembly may be molded. Examples of coupling elements may include recesses, tabs, pins, threaded preparations, segments for use with braze, solder, or weldment, fasteners, adhesives, and/or the like.

The base 106 is a base of the fin sensor 102 to which the fins are coupled. The base 106 may limit the motion of the fins 108a and 108b. In an embodiment, the base 106 has apertures through which the fins 108a and 108b are situated, with the fins 108a and 108b having elements on the upward 153 and downward 155 sides of the base 106.

In an embodiment, the base 106 is conformal to a conduit such that the base 106 acts as an element of the conduit with a side (perhaps the downward 155 side in the embodiment shown) of the base 106 exposed to the fluid that flows in the conduit 110 during operation.

In an embodiment the base 106 may be or have a plate. In an embodiment, the plate may be a plate that has a thickness (or hardness) that is less or greater than the thickness of the material defining the wall of the conduit 110. In an embodiment, the plate may be thicker in certain portions of the plate and thinner in other portions. For instance, the center of the plate may be thinner than the areas where the plate is coupled to the conduit, the middle of the plate with respect to the cross axis 131 may be thinner than the edges of the plate that are adjacent to the conduit 110 in the cross axis 131, the middle of the plate with respect to the cross axis 131 may be thicker than the edges of the plate that are adjacent to the conduit 110 in the cross axis 131, the thickness of the plate may have a grade that continues to one of increase or decrease from at least an edge of the plate that is adjacent to the conduit in the cross axis 131 to the middle of the plate in the cross axis 131, or the like. In an embodiment, instead of varying the thickness of the plate, the materials may be varied, allowing for softer and harder regions of the plate. Any of the relationships in the plate disclosed with respect to thickness and thinness are contemplated with respect to hardness and softness (perhaps by varying materials), respectively. Varying thickness (or softness) in the plate may allow for better net cancellation of forces in the vertical axis 151.

The base coupler 116 is an element that couples the base 106 to an environment in which the fin sensor 102 is being used. For instance, the base coupler 116 may be used to couple the base 106 of the fin sensor 102 to a position at which to measure flow, for instance a conduit 110. The base coupler 116 may couple the base 106 to the conduit along the periphery of the base 106. The base 106 may be coupled to the base coupler 116 in any manner known in the art, for instance, by one or more of welding, brazing, adhesive bonding, or mechanical fitting. In an embodiment, the base 106 may be formed with the base coupler 116 as an integral component.

The balance rib 118 is an element that partially restricts the flexure of the base 106 in certain locations of the base 106. The balance rib 118 may be an elongated member. The balance rib 118 may be composed of a material that is sufficiently stiff to restrict movement, such as vibratory and/or oscillatory movement. The balance rib 118 may help eliminate net motion of the fin sensor 102 in the vertical axis 151 relative to the conduit 110. The balance rib 118 may be coupled to one or more of the base 106, the conduit 110, and the base coupler 116. In an embodiment, the balance rib 118 is coupled directly to at least one of the fins 108a and 108b, but in other embodiments, the balance rib 118 may be not coupled to the fins 108a and 108b. In various embodiments, the balance rib 118 may be coupled to the base 106 at a number of locations along the base 106, for instance, a location along the base that at least includes the center of the base 106, a location along the base 106 that represents the part of the middle of base 106 on the cross axis 131 along part of the flow axis 141, and/or the like. In an embodiment, the balance rib 118 may extend or substantially extend across a length of the base 106, the length of the base 106 perhaps being the entire length of the base 106 or the length of the base 106 that is not restricted by the base coupler 116. The base coupler 116 may be coupled to the base plate at a position that is equidistant from portions of fins that protrude through the base 106 along the cross axis 131. By positioning the balance rib 118 between the fin protrusions, perhaps in equidistance from the protrusions along the cross axis 131, the balance rib 118 may compel the fins to rotate along a rotation point at points or substantially near points at the edges of the base 106 or at the edges of the base 106 where the base 106 is not restricted. This may compel the fins to have no net vertical axis 151 motion, and therefore, no reactionary motion of the surrounding structure.

In an embodiment, the balance rib 118 may have a centerline 198 representing the center of the longest length of the balance rib 118 if the balance rib 118 is symmetrical along this length, about the centerline 198. Although depicted in FIG. 1 as a dashed line visible on a surface, the centerline is internal of the balance rib 118, perhaps at the center of mass at each cross section defined by planes of the cross and vertical axes 131 and 151. In an embodiment, the balance rib 118 may be coupled to the fin sensor 102 such that the centerline 198 is parallel or substantially parallel to a flow axis 141. In an embodiment, the balance rib 118 may have uniform thickness about the centerline 198, along the flow axis 141. In another embodiment, the balance rib 118 may have varying thickness about the centerline 198, along the flow axis 141 and/or varying thickness along the flow axis 141 itself in the cross axis 131. For instance, in an embodiment, a thickness of at least one terminal end of the balance rib 196 in the cross axis 131 about the center line 198 may be greater than a thickness of a middle portion of the balance rib 197 in the cross axis 131 about the center line 198. In another embodiment, a thickness of at least one terminal end of the balance rib 196 in the cross axis 131 about the center line 198 may be less than a thickness of a middle portion of the balance rib 197 in the cross axis 131 about the center line 198.

An embodiment is contemplated where a balanced base assembly is formed. The balanced base assembly may include, at least, a base 106 and a balance rib 118. In various embodiments, the balanced base assembly may further include fins 108a and 108b. Further, the base 106 may be configured to be a varying base 306, as shown in FIG. 3 and described in the specification, generally. In an embodiment, this balanced base assembly may be a component of the fin sensor 102.

The transducers 104a-c are elements that drive and/or measure the motion of the fins 108a and 108b. While three transducers are shown in the Figures, any number of transducers may be used. In the embodiment shown in FIG. 1, the upstream transducer 104a is a sensing transducer that measures upstream oscillations of relative motion between the first fin 108a and the second fin 108b. In the embodiment shown in FIG. 1, the driving transducer 104b is a transducer that acts as a driver and vibrates a middle located protrusion and/or segment of a protrusion 114a or segment of protrusion114a of the first fin 108a and a middle located protrusion 114b or segment of protrusion 114b of the second fin 108b, the middle location being a middle location of the fin along the flow axis 141. In other embodiments, the driving transducer 104b, acting as a driver, may drive the base 106 or may drive fewer or more of the fins 108a and 108b. In another embodiment, the driving transducer 104b may be situated internally of the base 106 and vibrate one or more of the base 106 and/or at least one of the fins 108a and 108b. In the embodiment shown in FIG. 1, the downstream transducer 104c is a sensing transducer that measures downstream oscillations of relative motion between the first fin 108a and the second fin 108b. A phase difference or time delay may be measured between the upstream and downstream oscillations in order to yield a mass flow rate of a fluid flowing through and/or around the fins. In another embodiment, a command signal from the driving transducer 104b can be used instead of or in addition to the upstream or downstream measured vibrational response to determine phase difference. The transducers 104a-c may also be used to drive and take measurements that can be used with known techniques to determine density and/or viscosity. Combining these measurements can yield a volumetric flow rate. The methods for these determinations are well-known in the art.

In an embodiment, the transducers 104a-c may be coupled to the fin protrusions 114a and 114b. The fin protrusions 114a and 114b may have different segments for coupling transducers. For instance, in an embodiment each of 114a and 114b may have three segments, the segments perhaps having complementary faces that oppose one another between the fin protrusions 114a and 114b. Each of the transducers 104a-c may be coupled to one of the corresponding segments of the fin protrusions 114a and 114b (the corresponding segments perhaps facing one another in the cross axis 131). In this embodiment, the three transducers 104a-c may be aligned with one another in the flow axis 141 (at least, when the fin sensor 102 is not operating). In this embodiment, the transducers 104a-c may be coupled to the fins 108a and 108b in positions situated on the side of the base 106 that opposes the side of the base 106 that has the portions of the fins 108a and 108b that are immersed.

In various embodiments, the fin couplers 120a and/or 120b may couple the fins 108a and/or 108b on an immersion side 342 or an external side 344. For instance, in embodiments where the fin couplers couple the fins 108a and 108b on the external side by coupling the fin protrusions 114a and 114b, for instance, by coupling segments that represent the fin protrusions 114a and 114b. The fin couplers 120a and/or 120b may be coupled to the fins at positions downward 155 and/or upward 153 of the areas on the fins 108a and/or 108b where the one or more of the transducers 104a-c are coupled. In an embodiment, the fin couplers 120a and/or 120b are coupled to the fins on the external side 344 of the base 106 at a position closer to the base 106 than the location on the fins 108a and/or 108b at which the transducers 104a-c are coupled. In an embodiment, the fin couplers 120a and/or 120b are coupled to the fins on the external side 344 of the base 106 at a position closer to the location on the fins 108a and/or 108b at which the transducers 104a-c are coupled than to the base 106. In the embodiments where the fin couplers 120a and/or 120b are coupled to the fins 108a and/or 108b on the external side 344 of the base 106, it can be appreciated that the fin couplers 120a and/or 120b may be outside of the fluid flow and may reduce the likelihood of the fin couplers 120a and/or 120b affecting the flow profile and/or being susceptible to erosion and/or corrosion. In the embodiments where the fin couplers 120a and/or 120b are coupled to the fins 108a and/or 108b on the external side 344 of the base 106, the fin couplers 120a and/or 120b may still induce mode splitting and/or may still induce more curl in an OOP mode.

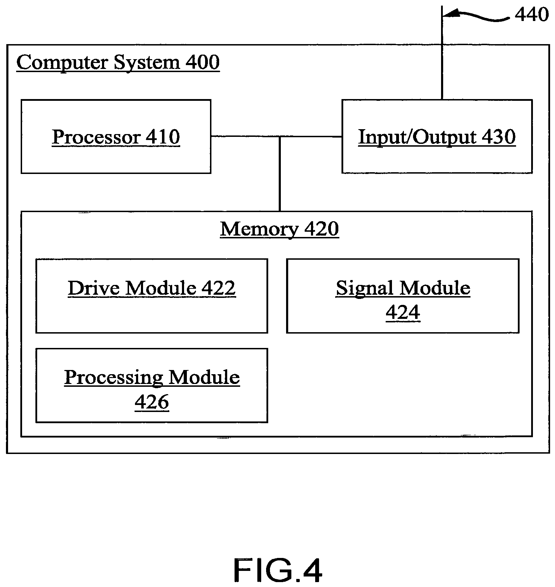

The meter electronics 112 is a set of electronic logic circuits that determines flow properties from flow measurements. The meter electronics 112 is not shown in FIG. 1, but configurations and coupling methods for the meter electronics are well-known in the art. The meter electronics 112 may have logic circuits representing a processing element, logic circuits representing memory, logic circuits for transmitting and receiving data, and communicative couplings to couple to sensors, drivers, computing devices, other meter electronics 112 and the like. The meter electronics 112 may execute, by a processor, commands stored in memory to transmit drive signals, receive sensor data (for instance from sensing transducers such as the upstream transducer 104a and the downstream transducer 104c), determine flow characteristics, and/or transmit raw or determined data to external computing devices or sensors, and the like. The meter electronics 112 can be used to determine and/or transmit data representing, for instance, mass flowrates, densities, volumetric flowrates, and/or the like. The meter electronics 112 can be configured to drive or transmit instructions to drive the fins 108a and 108b at different frequencies, phases, and/or in different modes using the driving transducer 104b. In an embodiment, the meter electronics 112 may be coupled to the base 106 or the fins 108a and 108b, and may be perhaps, coupled on the external side 344 of the base 106. In another embodiment, the meter electronics 112 may be a device external of the fin sensor 102. The meter electronics 112 may be an embodiment of the computer system 400 of FIG. 4.

In an embodiment, one, any combination, or all of the electronic elements may be external of the fluid flow and/or may be external of the base. The electronic elements may include one, any combination, or all of the transducers 104a-c and/or the meter electronics 112.

The flow axis 141 is the overall direction of the expected flow of a flow fluid in a conduit, the flow axis 141 being orthogonal to the cross axis 131 and the vertical axis 151. In a straight conduit, this axis may be defined by the center of the interior of the conduit in along a line representing the fluid flow. The upstream direction 143 is defined as the direction upstream from which the flow fluid flows, along the flow axis 141. The downstream direction 145 is defined as the direction downstream to which the flow fluid flows, along the flow axis 141.

The vertical axis 151 is a line that bisects the base 106 and center point of the interior cross section (the cross section having the same internal radius as the overall conduit) of the conduit 110 if a conduit were coupled, the vertical axis 151 being orthogonal to the flow axis 141 and the cross axis 131. The upward direction 153 is defined as a direction from the center of the conduit 110 to the base 106 along the vertical axis 151. The downward direction 155 is defined as a direction from the base 106 to the center of the conduit 110 along the vertical axis 151.

The cross axis 131 is an axis defined as parallel or substantially parallel (if the base is curved, it may be parallel to a line that represents an average distance of the base 106 from the center of the conduit 110) to the base 106 and orthogonal to the fluid flow, the cross axis 131 being orthogonal to the flow axis 141 and vertical axis 151. The first direction 133 and the second direction 135 are opposite directions along the cross axis 131. In the embodiment shown, the first direction 133 may be a direction to the left of the conduit 110 if viewing a cross section of the conduit 110 defined by the vertical axis 151 and the cross axis 131 from a perspective facing the downstream direction 145. While the directions and reference axes appear to be in reference to the fin sensor 102 and a flow therethrough, it should be appreciated that embodiments disclosed of specific elements of the fin sensor meter, when being described with respect to the directions and reference axes can be thought of as independent elements with the direction and reference axes simply to demonstrate relative positions, couplings, placements, and configurations of those elements in isolation from the fin sensor 102 and flow therethrough as a whole. For example, if the thickness of a balance rib 118 varies along a flow axis, the variation may only be relative to the balance rib 118 itself in the figures and not with respect to flow or the flow sensor 102, generally. Also, it should be appreciated that embodiments of the fin sensor 102 and its elements disclosed are primarily concerned with these references representing the relative positions, couplings, placements, and configurations at times when the fin sensor 102 experiences no flow, for instance, at time of manufacturing or installation.

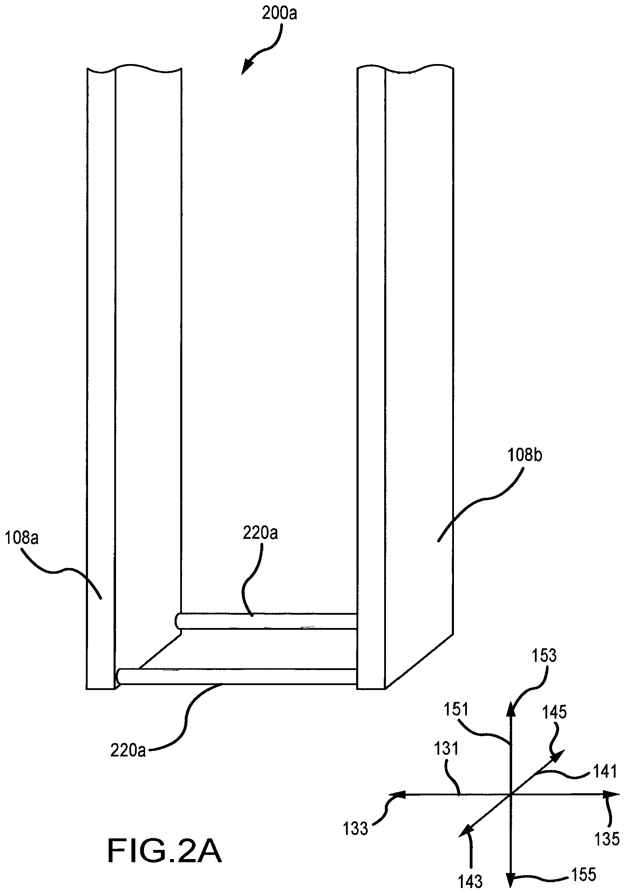

**FIGs. 2A-2C** show perspective views of embodiments of the fin coupler assemblies 200a-200c. The fin coupler assemblies 200a-200c may be embodiments of the fin coupler assemblies disclosed in the description of FIG. 1. It should be appreciated that the images shown may not be to scale and embodiments with different relative dimensions are contemplated. For the purpose of clarity, a reference with the reference directions and axes is shown for the particular perspectives of FIGs. 2A-2C.

**FIG. 2A** shows a perspective view of an embodiment of a fin coupler assembly 200a with rod shaped fin couplers 220a. The rod shaped fin couplers 220a may be embodiments of the fin couplers (120a and 120b). For the purposes of this specification, a fin coupler assembly is an assembly in which at least one fin (108a and/or 108b) is coupled to at least one fin coupler (120a and/or 120b). The rod shaped fin coupler 220a may be an embodiment of fin coupler 120a or 120b.

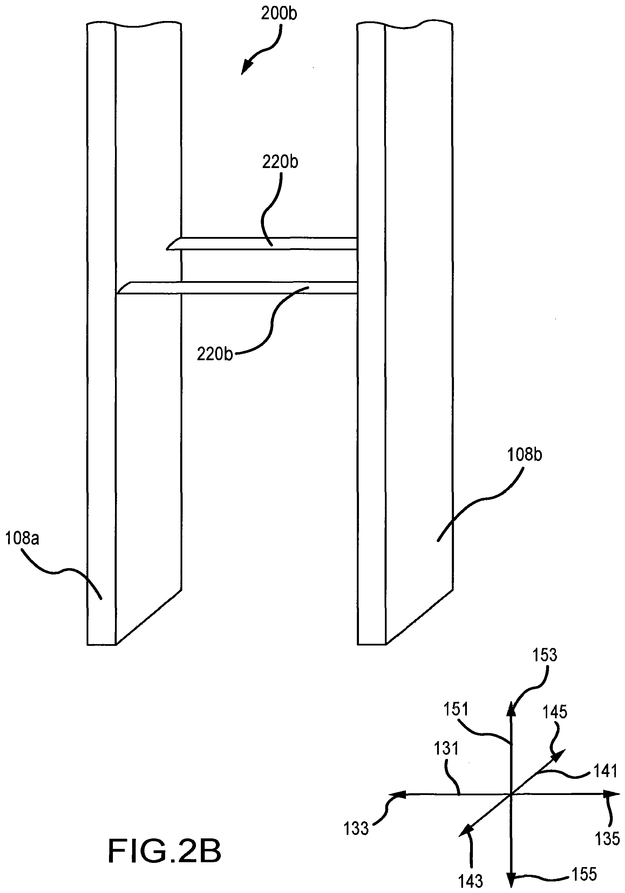

**FIG. 2B** shows a perspective view of an embodiment of a fin coupler assembly 200b with a strip shaped fin coupler 220b. The strip shaped fin couplers 220b may be an embodiment of fin couplers 120a and/or 120b. In alternative embodiments, the flat portion of the strip may, for instance, when there is no flow in the conduit, be parallel to a plane defined by the cross axis 131 and the flow axis 141, be parallel to a plane defined by the vertical axis 151 and the cross axis 131, or may have a portion that is twisted in a helical fashion. In another embodiment, the strip shaped fin coupler 220b may have at least one tapered end. For instance, the strip shaped fin coupler 220b may be tapered such that the one or more of the upstream 143 end and the downstream 145 end of the strip shaped fin coupler 220b have a smaller cross sectional area in a plane defined by the vertical and cross axes 151 and 131 than a cross sectional area in a plane defined by the vertical and cross axes 151 and 131 of a more central position along the flow axis 141 of the strip shaped fin coupler 220b. For instance, a cross section in a plane defined by the vertical and flow axes 151 and 141 of the strip shaped fin coupler 220b may be narrower in the vertical axis 151 at one or more of the upstream and downstream 143 and 145 ends of the cross section than at least one more central portion in the flow axis 141 of the cross section.

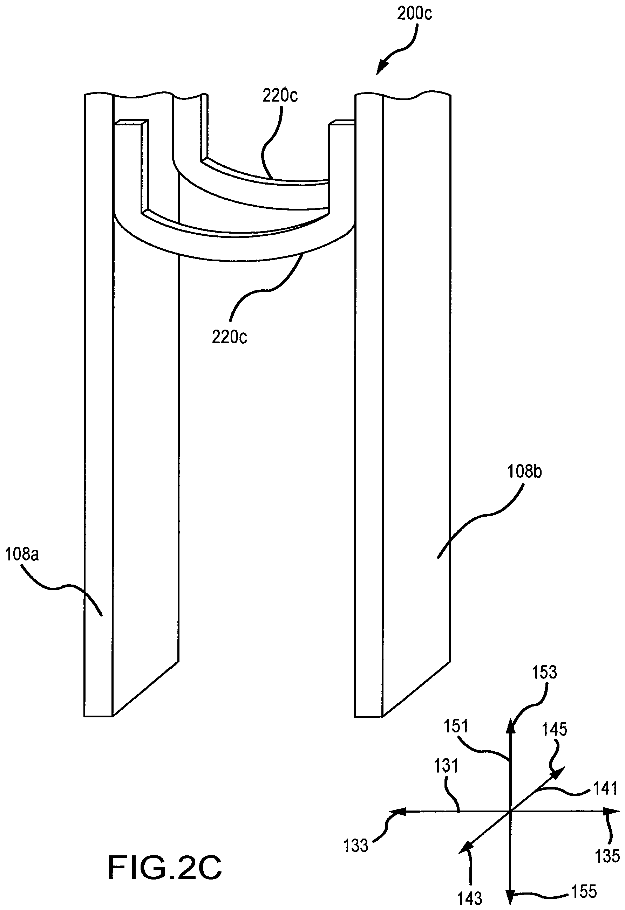

**FIG. 2C** shows a perspective view of an embodiment of a fin coupler assembly 200c with a brace bar shaped fin coupler 220c. The brace bar shaped fin coupler 220c may be an embodiment of fin coupler 120a or 120b. Curves 204c of the brace bar shaped fin coupler 220c may be such that the brace bar shaped fin coupler 220c is coupled between different positions or the same positions of the corresponding faces of the fins 108a and 108b. For instance, the brace bar shaped fin coupler 220c may be one or more of coupled to a position on the first fin 108a that is upward 153 of the position on the corresponding face of the second fin 108b to which the same brace bar shaped fin coupler 220c may be coupled, coupled to a position on the first fin 108a that is upstream 143 of the position on the corresponding face of the second fin 108b to which the same brace bar shaped fin coupler 220c may be coupled, and/or the like.

In the embodiments expressed in FIG. 2A-2C, it should be appreciated that any of the fin couplers 120a and/or 120b, regardless of shape or conformation, may be coupled to each of fins 108a and/or 108b in any position or manner disclosed in this specification.

**FIG. 3** is a cross-sectional view of an embodiment of a flow sensor system 300 with a fin sensor 302 having a varying base 306 in a balanced base assembly. The cross-section of the cross-sectional view is a cross section in a plane defined by the vertical axis 151 and the cross axis 131. The flow sensor system 300 may have a fin sensor 302 with a varying base 306, a first fin 308a, a second fin 308b, an immersion side 342, and an external side 344. The flow sensor system 300, fin sensor 302, varying base 306, first fin 308a, and second fin 308b may be embodiments of the fin sensor system 100, fin sensor 102, base 106, first fin 108a, and second fin 108b from FIG. 1, respectively. The varying base 306 may have a first harder portion 310, a second harder portion 312, and a softer portion 314. Reference directions and axes are shown corresponding to the view of FIG. 3. It should be appreciated that the images shown may not be to scale and embodiments with different relative dimensions are contemplated.

In the embodiment shown, the softer portion 314 is in the middle of the varying base 306 (the middle of the varying base 306 in the cross axis 131) and first and second harder portions 310 and 312 of the varying base 306 on the sides of the varying base 306 close to where the varying base 306 is coupled to the conduit. It can be appreciated that, in various embodiments, a transition between the softer portion 314 and harder portions 310 and 312 may be smooth in terms of increasing hardness from the middle of the varying base 306 to each of the edges on each of the first and second sides of the varying base 306, or the transition may happen stepwise with increasing hardness in blocks from the middle of the varying base 306 to each of the edges on each of the first and second sides of the varying base. In an embodiment, the difference in softness and hardness can be facilitated by making the softer portions thinner and the harder portions thicker, perhaps by cutting out a portion of the base 106 or forming the base 106 as a varying base 306 with varying thickness. In another embodiment, the softness and hardness can be varied by the use of different materials or alloys along the cross axis 131 that are harder in the harder portions 310 and 312 and softer in the softer portion 314. The balance rib 118 may be coupled to the varying base 306 in the middle of the cross axis 131 of the varying base 306, the length of the balance rib 118 along or substantially along the flow axis 141 (not visible in this figure in a plane representing the cross and vertical axes 131 and 151).

As depicted, with the balance rib 118 coupled to the varying base 306, the softer portion 314 may represent areas around the balance rib 118. It can be appreciated that, in the absence of the balance rib 118, 314 would not necessarily represent separate softer sections, as depicted (the balance rib 118 may add rigidity when coupled to the sensor 302). In an embodiment, the portion of the varying base 306 between the two fins 108a and 108b (along the cross axis 131) may be softer than the portions of the varying base 306 between each of the fins 108a and 108b and the edges of the varying base 306 (in the cross axis 131). In an embodiment, the softer portion 314 and the harder portions 310 and 312 may be formed by coupling at least one of the fins 108a and 108b closer in the cross axis 131 to an edge of the varying base 306 than to the balance rib 118.

Embodiments in which the varying base 306 has no balance rib 118 and embodiments in which the fin sensor 102 has a balance rib 118 with no varying base 306 are contemplated. For instance, an embodiment may have a base 106 with uniform properties in isolation, such that the thinness and material are consistent (with any variability in the plate owing to a coupling to an environment, such as the conduit 110), and may still have a balance rib 118. In this embodiment, the base 106 may be a uniform, thin plate.

In an embodiment, the base 106 is a substantially flat member with a thin edge relative to the surface area of two opposing surfaces. One of the two surfaces may be characterized as an immersion side 342 surface, and the side that opposes the immersion side 342 surface may be called an external side 344 surface. The immersion side 342 represents a side of the base 106 on which the portions of fins 108a and 108b and/or the base 106 are exposed to the flow fluid to be measured. The external side 344 represents a side of the base 106 on which the fin protrusions 114a and 114b may be located and, perhaps, coupled to transducers.

In an embodiment, the fin protrusions 114a and 114b may have segments, the segments perhaps each protruding through apertures in the base 106 when the fin sensor 302 is assembled. In an embodiment, the transducers 104a-c may be coupled to the fin protrusions 114a and 114b. The fin protrusions 114a and 114b may have different segments for coupling transducers. For instance, in an embodiment each of 114a and 114b may have three segments, the segments perhaps having complementary faces that oppose one another between the fin protrusions 114a and 114b. Each of the transducers 104a-c may be coupled to one of the corresponding segments of the fin protrusions 114a and 114b (the corresponding segments perhaps facing one another in the cross axis 131). In this embodiment, the three transducers 104a-c may be aligned with one another in the flow axis 141 (at least, when the fin sensor 102 is not operating). In this embodiment, the transducers 104a-c may be coupled to the fins 108a and 108b in positions situated on the external side 344 of the base 106.

**FIG. 4** shows a block diagram of an embodiment of a computer system 400. In an embodiment, the computer system 400 may be a meter electronics, for instance, the meter electronics 112. In various embodiments the computer system 400 may be comprised of application specific integrated circuits or may have a discrete processor and memory elements, the processor elements for processing commands from and storing data on the memory elements. The computer system 400 may be an isolated physical system, a virtual machine, and/or may be established in a cloud computing environment.

The computer system may have a processor 410, a memory 420, an input/output 430, and a communicative coupler 440. The memory 420 may store and/or may have integrated circuits representing, for instance, a drive module 422, a signal module 424, and a processing module 426. In various embodiments, the computer system 400 may have other computer elements integrated into the stated elements or in addition to or in communication with the stated computer elements, for instance, buses, other communication protocols, and the like.

The processor 410 is a data processing element. The processor 410 may be any element used for processing such as a central processing unit, application specific integrated circuit, other integrated circuit, an analog controller, graphics processing unit, field programmable gate array, any combination of these or other common processing elements and/or the like. The processor 410 may have cache memory to store processing data. The processor 410 may benefit from the methods in this specification, as the methods may enhance the resolution of calculations and reduce error of those calculations using the inventive structures presented.

The memory 420 is a device for electronic storage. The memory 420 may be any non-transitory storage medium and may include one, some, or all of a hard drive, solid state drive, volatile memory, integrated circuits, a field programmable gate array, random access memory, read-only memory, dynamic random-access memory, erasable programmable read-only memory, electrically erasable programmable read-only memory, cache memory and/or the like. The processor 410 may execute commands from and utilize data stored in the memory 420.

The computer system 400 may be configured to store any data that will be used by the drive module 422, signal module 424, and/or processing module 426 and may store historical data for any amount of time representing any parameter received or used by the drive module 422, signal module 424, and/or processing module 426 in the memory 420. The computer system 400 may also store any data that represents determinations of any intermediates in the memory 420, perhaps with time stamps representing when the data was taken or determined. While the drive module 422, signal module 424, and processing module 426 are shown as three separate and discrete modules, the specification contemplates any number (even one or the three as specified) and variety of modules working in concert to accomplish the methods expressed in this specification.

The drive module 422 is a module that transmits a driver signal to the transducer (for instance, driving transducer 104b of FIG. 1) to vibrate elements of a sensor assembly. The driver module 422 can be configured to transmit data representing commands to drive in a variety of different modes. For instance, the drive module 422 may be configured to transmit data representing commands to drive in IP modes and/or OOP modes.

The signal module 424 is a module that receives sensor data, for instance, data representing phase differences, time delays, and/or frequency responses. In a fin sensor 102, the signal module 424 may receive frequency data from the upstream transducer 104a and the downstream transducer 104c. The determination of a phase difference or time delay between the frequencies represented by the frequency data of the upstream transducer 104a and the downstream transducer 104c.

The processing module 426 is a module that determines behavior of the fin sensor 102 and/or outputs data relevant to the fin sensor 102. The processing module 426 may determine flow characteristics from the data received by the signal module 424. For instance, the processing module 426 may use the phase difference or time delay data to calculate a flow fluid mass flow rate, using methods known in the art. In an embodiment, the processing module 426 may use the drive signal from the drive module 422 as a signal from which a time delay or phase difference is derived (when compared with another transducer signal). The processing module 426 may also derive a flow fluid density from frequency data received by the signal module 424. The processing module 426 may also derive a flow fluid viscosity from frequency and/or phase data received by the signal module 424.

The processing module 426 may further be configured to determine modes and/or frequencies at which to drive the driver, perhaps by driving a closed or open feedback loop to achieve one or more of a desired frequency or phase difference. Upon determination of a data command representing a drive mode to be driven, the processing module 426 may transmit this command to the drive module 422 to transmit commands to drive a driver circuit, for instance, driving the driving transducer 104b.

The capabilities of the drive module 422, signal module 424, and processing module 426 are contemplated with respect to, and reflect methods that are performed in, the flowcharts presented. All methods in this specification are contemplated with respect to each flowchart and flowchart description, and all methods and capabilities of the drive module 422, signal module 424, and processing module 426 are contemplated for the purposes of any method claims that follow this description, in the orders of steps presented and any other order that would make sense to a person of ordinary skill in the art in the context of this specification.

The input/output 430 is a device used to communicatively couple the computer system 400 to external elements. The input/output 430 is capable of connecting the computer system 400 to external elements, using known technologies, for instance, universal serial bus, ProLink, serial communication, serial advanced technology attachments, and/or the like. The input/output 430 may have a communicative coupler 440. The communicative coupler 440 is used to couple the computer system 400 with components external of the computer system 400, for instance, with external compute devices, sensors, transducers (for instance, transducers 104a-c), other sensor assemblies, and/or the like.

### Flowcharts

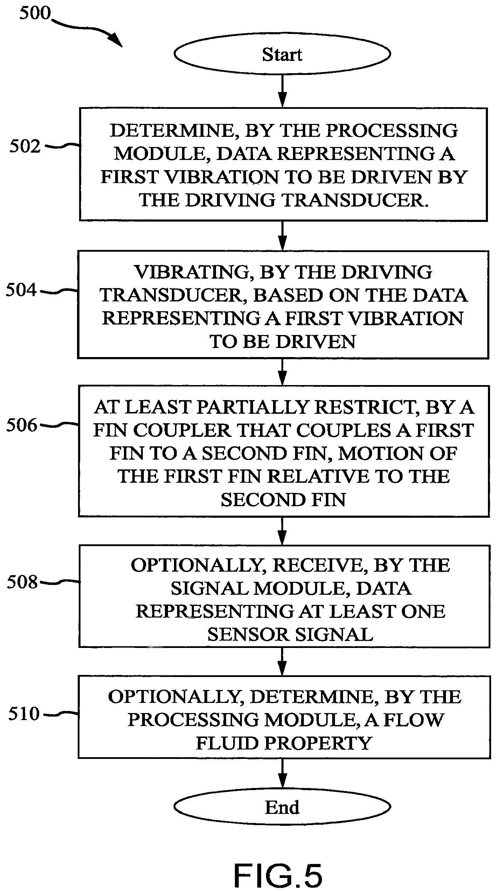

FIGs. 5-9 show flowcharts of embodiments of methods for making and using embodiments of fin coupler assemblies, balanced base assemblies, and combined fin coupler and balanced base assemblies. The methods disclosed in the flowcharts are non-exhaustive and merely demonstrate potential embodiments of steps and orders. The methods must be construed in the context of the entire specification, including elements disclosed in descriptions of FIGs. 1-4, including, for instance, the base 106 (for instance, the varying base 306), the fins 108a and 108b, the balance rib 118, and the fin couplers 120a and 120b.

**FIG. 5** shows a flowchart of an embodiment of a method 500 for using a fin coupler assembly of a fin sensor 102. The method steps of method 500 are presented with embodiments that include references to elements presented in other figures and the descriptions of the other figures. All capabilities, conformations, relative couplings, and positionings of these elements disclosed in the other figures and the descriptions of the other figures are contemplated for the purposes of executing these steps.

Step 502 is determining, by the processing module 426, data representing a first vibration to be driven by the driving transducer 104b. In an embodiment, the first drive to be driven by the driving transducer 104b may be one or more of an IP mode and an OOP mode. In an embodiment, an out of phase mode is a mode with separation between the frequency of vibration of the fins 108a and 108b by 180°. The processing module 426 may, itself, transmit the data representing a first vibration to a driver (for instance the driving transducer 104b) or the transmitting may be conducted via the drive module 422.

Step 504 is vibrating, by the driving transducer 104b, based on the data representing a first vibration to be driven.

Step 506 is at least partially restricting, by at least one fin coupler 120a and/or 120b that couples a first fin 108a to a second fin 108b, motion of the first fin 108a relative to the second fin 108b. In an embodiment, the at least partially restricting may restrict the motion of a free edge 199 of the first fin 108a relative to the motion of a free edge 199 of the second fin 108b. In an embodiment, the at least partially restricting includes restricting the motion of the first fin 108a at any site at which the at least one fin coupler 120a and/or 120b is coupled to the first fin relative to the motion of the second fin 108b. In an embodiment, the at least one fin coupler 120a and/or 120b does not directly restrict the movement of any element of the base 106, the at least one fin coupler 120a and/or 120b not being coupled to or an element of the base 106. In an embodiment, the at least one fin coupler 120a and/or 120b does not directly restrict the movement of any element of the transducers 104a-c, the at least one fin coupler 120a and/or 120b not being coupled to or an element of the transducers 104a-c. All coupling methods, conformations and alternative arrangements of fins 108a and 108b and fin couplers 120a and 120b are contemplated for this step.

Step 508 is optionally, receiving, by the signal module 424 or the processing module 426, data representing at least one sensor signal. In an embodiment where the signal module 424 receives the data representing the at least one sensor signal, the signal module 424 may convey this information or a processed output derived from the data representing the at least one signal from the signal module to the processing module 426.

Step 510 is optionally, determining, by the processing module 426 a flow fluid property, for instance, mass flowrate and/or density.

In an embodiment, each of the steps of the method shown in FIG. 5 is a distinct step. In another embodiment, although depicted as distinct steps in FIG. 5, steps 502-512 may not be distinct steps. In other embodiments, the method shown in FIG. 5 may not have all of the above steps and/or may have other steps in addition to or instead of those listed above. The steps of the method shown in FIG. 5 may be performed in another order. Subsets of the steps listed above as part of the method shown in FIG. 5 may be used to form their own method. The steps of method 500 may be repeated in any combination and order any number of times, for instance, continuously looping in order to maintain surveillance.

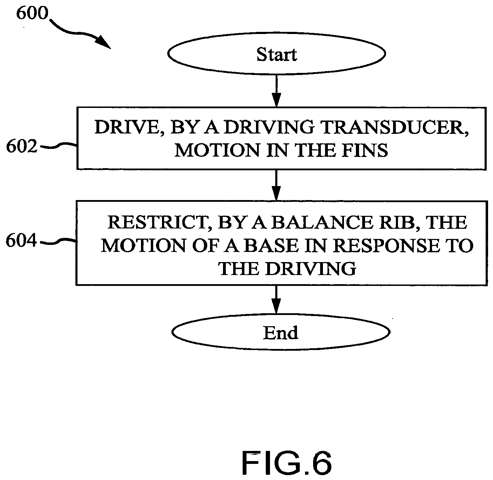

**FIG. 6** shows a flowchart of an embodiment of a method 600 for using a balanced base assembly of a fin sensor 102. The method steps of method 600 are presented with embodiments that include references to elements presented in other figures and the descriptions of the other figures. All capabilities, conformations, relative couplings, and positionings of these elements disclosed in the other figures and the descriptions of the other figures are contemplated for the purposes of executing these steps.

Step 602 is driving, by a driving transducer 104b, a motion in fins 108a and 108b.

Step 604 is restricting, by a balance rib 118, the motion of a base 106 in response to the driving. In an embodiment, the balance rib 118 may restrict the motion of the base 106 along a portion in or substantially in the middle of the base 106, the middle defined as the middle of the cross axis 131. Step 604 may result in motion of the fins 108a and 108b generating no net motion in the direction from the center of the conduit, through the middle of the sensor assembly, providing balance and not moving the sensor assembly relative to the support structure to which the fin sensor 102 is coupled. In an embodiment, this may provide no net motion of the fins 108a and/or 108b and/or the fin sensor 102 in the direction from the center of the conduit through the middle of the base 106, perhaps defined as along the vertical axis 151. It can be appreciated that, in some embodiments, fins 108a and 108b of the fin sensor 102 may rotate about the respective center points of the fins 108a and 108b. In an embodiment, the balance rib 118 at least partially restricts a motion of the base 106 in a vertical axis 151 along a middle portion of the base 106, the middle portion being a portion defined by the middle of a cross axis 131. In an embodiment, the balance rib 118 at least partially restricts the base 106 at a position between a position on the base 106 at which the first fin 108a is coupled or is to be coupled and a different position on the base 106 at which the second fin 108b is coupled or is to be coupled, on the cross axis 131. In an embodiment, the balance rib 118 may at least partially restrict the motion of the base 106 at a position equidistant from the position of the first fin 108a and the different position of the second fin 108b on the cross axis 131. In an embodiment, the balance rib 118 may at least partially restrict the motion of the base 106 at least along a linear portion of the base 106 that is parallel to a flow axis 141. In an embodiment, the balance rib 118 may at least partially restrict the motion of the base 106 such that movement of one or more of a downstream 145 end of the base 106 and an upstream 143 end of the base 106 is restricted less than a middle of the base 106, the middle of the base 106 being the middle of the base 106 in the flow axis 141. Alternatively, the balance rib 118 may at least partially restrict the motion of the base 106 such that movement of one or more of a downstream 145 end of the base 106 and an upstream 143 end of the base 106 is restricted more than a middle of the base 106, the middle of the base 106 being the middle of the base 106 in the flow axis 141.

In an embodiment, each of the steps of the method shown in FIG. 6 is a distinct step. In another embodiment, although depicted as distinct steps in FIG. 6, steps 602-604 may not be distinct steps. In other embodiments, the method shown in FIG. 6 may not have all of the above steps and/or may have other steps in addition to or instead of those listed above. The steps of the method shown in FIG. 6 may be performed in another order. Subsets of the steps listed above as part of the method shown in FIG. 6 may be used to form their own method. The steps of method 600 may be repeated in any combination and order any number of times, for instance, continuously looping in order to maintain surveillance.

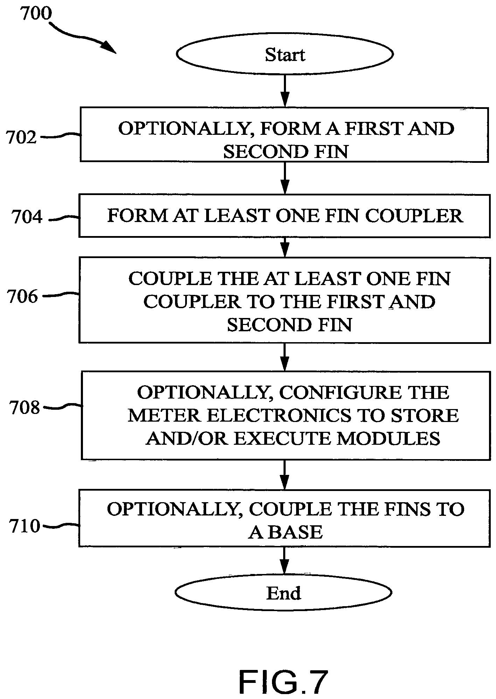

**FIG. 7** shows a flowchart of an embodiment of a method 700 of making a fin coupler assembly of a fin sensor 102. The method steps of method 700 are presented with embodiments that include references to elements presented in other figures and the descriptions of the other figures. All capabilities, conformations, relative couplings, and positionings of these elements disclosed in the other figures and the descriptions of the other figures are contemplated for the purposes of executing these steps. In an embodiment, the fin coupler assembly may be combined with a base 106 (for instance, a varying base 306) and/or a balance rib 118 to make a combined, balanced base and fin coupler assembly. In an embodiment, the fin coupler assembly may be a component of the fin sensor 102.

Step 702 is optionally, forming a first and second fin 108a and 108b. The manufacturing methods used to form these components may be any appropriate manufacturing techniques known in the art, for instance, molding, extrusion, and other methods, and/or any combination thereof. The fin couplers may be formed of, for instance metal or composite and may be formed, for instance, by additive (3D printing) manufacturing, machining from a solid block, machining in parts and assembling using any or any combination of fasteners, adhesives, weldments, brazings, and/or the like.

Step 704 is forming at least one fin coupler (e.g. the first and second fin couplers 120a and/or 120b). The manufacturing methods for making elements such as the fin coupler are well-known in the art, for instance molding, extrusion, and other methods. The fin couplers may be formed of, for instance metal, plastic or other composite. The at least one fin coupler may be formed in a variety of shapes, for instance, as rods, strips, or balance bars. In an embodiment, the at least one fin coupler may be formed with the fins 108a and 108b as a single piece, negating a need for a separate step of forming the fins 108a and 108b (as in Step 702) and/or a separate step of coupling the at least one fin coupler to the fins 108a and 108b. In an embodiment, the at least one fin coupler may be formed with one or more coupling elements configured to more easily and/or more effectively couple the at least one fin coupler to the fins 108a and 108b, for instance, one or both terminal ends of the at least one fin coupler. In another embodiment, the one or more of the fins 108a and 108b may be formed with coupling elements to more easily and/or more effectively couple the at least one fin coupler to the fins 108a and 108b. In still another embodiment, both the at least one fin coupler and the fins 108a and 108b may each have corresponding or complimentary coupling elements to couple the at least one fin coupler to the fins 108a and 108b. In an embodiment, the at least one fin coupler may be two, three, four, five, six, or any other number of fin couplers. In an embodiment, one or more of at least one fin 108a and/or 108b and at least one fin coupler 120a and/or 120b may be formed with a coupling , element configured to facilitate a coupling between the at least one fin 108a and/or 108b and the at least one fin coupler 120a and/or 120b.

Step 706 is coupling the at least one fin coupler to the first and second fin 108a and 108b. In embodiments in which one or more of the fins 108a and 108b and the at least one fin coupler have coupling elements, the at least one fin coupler and the fins 108a and 108b may be coupled at and/or by the coupling elements. Any method of coupling is considered, for instance, welding, brazing, 3D printing, soldering, adhesive bonding, plastic molding or melting, complimentary physical or mechanical connectors (e.g. screws), fitting in recesses, and/or the like. In an embodiment, a fin coupler 120a is coupled to a fin 108a at a position closer to a free edge 199 of the fin 108a than an edge of the fin 108a that is coupled or is to be coupled to a base 106. In an embodiment, two fin couplers 120a and 120b are coupled to the fins 108a and 108b. In this embodiment, the first fin coupler 120a may be coupled at least one position that is or will be at a different point along a flow axis 141 of at least one position at which the second fin coupler 120b may be coupled.

Step 708 is optionally, configuring the meter electronics 112 to store and/or execute one or more of a drive module 422, a signal module 424, and/or a processing module 426.

Step 710 is optionally, coupling the fins 108a and 108b to the base 106. In an embodiment, the fins 108a and 108b protrude through apertures in the base 106 such that the fins 108a and 108b have immersed portions configured to be immersed in a fluid flow and fin protrusions 114a and 114b that protrude from the side of the base 106 that opposes the immersed portions.

In an embodiment, each of the steps of the method shown in FIG. 7 is a distinct step. In another embodiment, although depicted as distinct steps in FIG. 7, steps 702-710 may not be distinct steps. In other embodiments, the method shown in FIG. 7 may not have all of the above steps and/or may have other steps in addition to or instead of those listed above. The steps of the method shown in FIG. 7 may be performed in another order. Subsets of the steps listed above as part of the method shown in FIG. 7 may be used to form their own method. The steps of method 700 may be repeated in any combination and order any number of times, for instance, continuously looping in order to maintain surveillance.

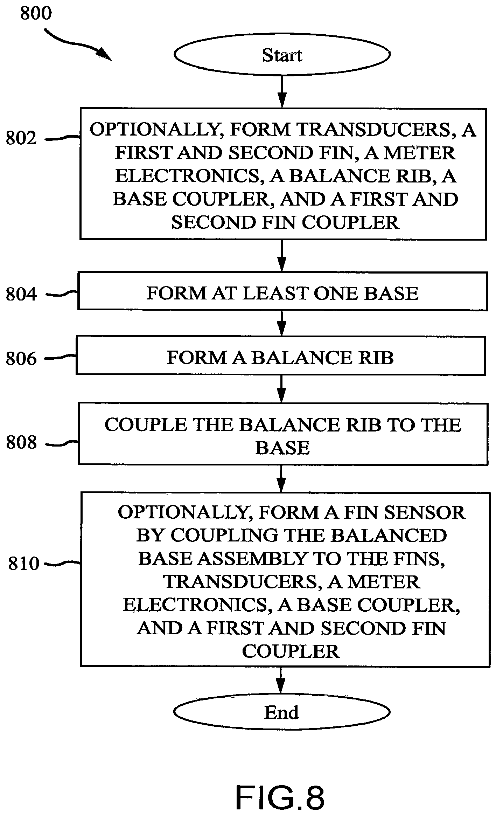

**FIG. 8** shows a flowchart of an embodiment of a method 800 of making a balanced base assembly of a fin sensor 102. The method steps of method 800 are presented with embodiments that include references to elements presented in other figures and the descriptions of the other figures. All capabilities, conformations, relative couplings, and positionings of these elements disclosed in the other figures and the descriptions of the other figures are contemplated for the purposes of executing these steps. In an embodiment, the balanced base assembly may be made with one or more fin couplers 120a and/or 120b in order to make a combined, balanced base and fin coupler assembly. In an embodiment, the balanced base assembly may be a component of the fin sensor 102.

Step 802 is optionally, forming transducers 104a-c, a first and second fin 108a and 108b, a meter electronics 112, a balance rib 118, a base coupler 116, and a first and second fin coupler 120a and 120b. The manufacturing methods used to form these components are established in the art, for instance, 3D printing, molding, coupling individually formed components, and/or the like.

Step 804 is forming at least one base 106. The base 106 may be a flat or substantially flat member with little thickness relative to the area of its larger surfaces. In an embodiment, the base 106 may be formed as thin and/or may be formed with a varying or uniform hardness. For instance, the base 106 may be formed as a varying base 306 such that the middle of the varying base 306 (being the middle of the cross axis 131) is less hard than the edges (of the varying base 306 in the cross axis 131). This varying may be accomplished by forming the base 106 by molding such that it generates a varying base 306 with a middle (along the cross axis 131) being thinner (having less material) than the edges (of the varying base 306 in the cross axis 131). In another embodiment, the varying may be accomplished by removing, perhaps by cutting portions of the base 106 to make the base 106 a varying base with a middle (along the cross axis 131) being thinner (having less material) than the edges (of the varying base 306 in the cross axis 131). In another embodiment, the base 106 may be composed of different materials along the cross axis 131, making the base a varying base 306, such that the middle of the varying base 306 (along the cross axis 131) is softer than the edges (of the varying base 306 in the cross axis 131).

Step 806 is forming a balance rib 118. The balance rib 118 may be an elongated member and may be manufactured using any standard manufacturing methods, and from any materials known in the art that are sufficient to at least restrict, to some extent, the motion of the base 106. In an embodiment, the balance rib 118 may have a centerline 198 representing the center of the longest length of the balance rib 118 if the balance rib 118 is symmetrical along this length in at least one axis, for instance, symmetrical in the cross axis 131 about the centerline 198. The balance rib 118 may have varying thickness around the centerline 198 along the length of the centerline 198. For instance, in an embodiment, a thickness of at least one terminal end of the balance rib 118 in the cross axis 131 about the center line 198 may be greater than a thickness of a middle portion of the balance rib 197 in the cross axis 131 about the center line 198. In another embodiment, a thickness of at least one terminal end of the balance rib 118 in the cross axis 131 about the center line 198 may be less than a thickness of a middle portion of the balance rib 197 in the cross axis 131 about the center line 198.

Step 808 is coupling the balance rib 118 to the base 106. The balance rib 118 may be coupled to the base at a middle position of the base in the cross axis 131, perhaps with the elongated portion along or substantially along the flow axis 141. In an embodiment in which the base 106 has fins 108a and 108b coupled to the base 106 or will have fins 108a and 108b coupled to the base 106, the balance rib 118 may be coupled to the base 106 between the coupled fins 108a and 108b, perhaps coupled between the fins 108a and 108b along the cross axis 131, and also perhaps coupled equidistant from a position for coupling or coupled to the first fin 108a and a different position for coupling or coupled to the second fin 108b along the cross axis 131. The assembly formed when the balance rib 118 is coupled to the base 106 (or varying base 306) may be considered a balanced base assembly of a fin sensor 102. In an embodiment, the balance rib 118 may be coupled to the fin sensor 102 such that the centerline 198 is parallel or substantially parallel to a flow axis 141. In an embodiment, the balance rib 118 may have uniform thickness about the centerline 198, along the flow axis 141. In another embodiment, the balance rib 118 may have varying thickness along the flow axis 141, about the centerline 198 in the cross axis 131. For instance, in an embodiment, a thickness of at least one terminal end of the balance rib 118 in the cross axis 131 about the center line 198 may be greater than a thickness of a middle portion of the balance rib 197 in the cross axis 131 about the center line 198. For instance, in an embodiment, a thickness of at least one terminal end of the balance rib 118 in the cross axis 131 about the center line 198 may be less than a thickness of a middle portion of the balance rib 197 in the cross axis 131 about the center line 198.

Step 810 is optionally forming a fin sensor 102 by coupling the balanced base assembly to the fins 108a and 108b (perhaps with the balance rib 118 between the fins 108a and 108b on the base 106), transducers 104a-c, a meter electronics 112, a base coupler 116, and/or a first and second fin coupler 120a and 120b. In an embodiment, the fin protrusions 114a and 114b may have segments, the segments perhaps each protruding through apertures in the base 106 when the fin sensor 302 is assembled. In an embodiment, the transducers 104a-c may be coupled to the fin protrusions 114a and 114b. The fin protrusions 114a and 114b may have different segments for coupling transducers. For instance, in an embodiment each of fin protrusions 114a and 114b may have three segments, the segments perhaps having complementary faces that oppose one another between the fin protrusions 114a and 114b. Each of the transducers 104a-c may be coupled to one of the corresponding segments of the fin protrusions 114a and 114b (the corresponding segments perhaps facing one another in the cross axis 131). In this embodiment, the three transducers 104a-c may be aligned with one another in the flow axis 141 (at least, when the fin sensor 102 is not operating). In this embodiment, the transducers 104a-c may be coupled to the fins 108a and 108b in positions situated on the side of the base 106 that opposes the side of the base 106 that has the portions of the fins 108a and 108b that are immersed. The meter electronics 112 may be coupled to the base 106 or the fins 108a and 108b, and may be perhaps, coupled on the external side 344 of the base 106.

In an embodiment, each of the steps of the method shown in FIG. 8 is a distinct step. In another embodiment, although depicted as distinct steps in FIG. 8, steps 802-810 may not be distinct steps. In other embodiments, the method shown in FIG. 8 may not have all of the above steps and/or may have other steps in addition to or instead of those listed above. The steps of the method shown in FIG. 8 may be performed in another order. Subsets of the steps listed above as part of the method shown in FIG. 8 may be used to form their own method. The steps of method 800 may be repeated in any combination and order any number of times, for instance, continuously looping in order to maintain surveillance.

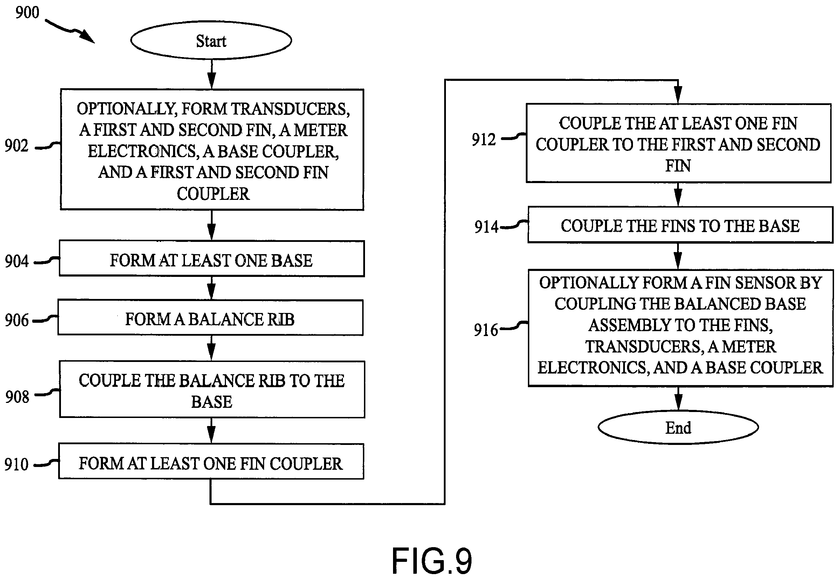

**FIG. 9** shows a flowchart of an embodiment of a method 900 of making a balanced base and fin coupler assembly of a fin sensor 102. The method steps of method 900 are presented with embodiments that include references to elements presented in other figures and the descriptions of the other figures. All capabilities, conformations, relative couplings, and positionings of these elements disclosed in the other figures and the descriptions of the other figures are contemplated for the purposes of executing these steps. In an embodiment, the balanced base assembly may be a component of the fin sensor 102.

Step 902 is optionally, forming transducers 104a-c, a first and second fin 108a and 108b, a meter electronics 112, a base coupler 116, and a first and second fin coupler 120a and 120b. The manufacturing methods used to form these components are established in the art, for instance, 3D printing, molding, coupling individually formed components, and/or the like.

Step 904 is forming at least one base 106. The base 106 may be a flat or substantially flat member with little thickness relative to the area of its larger surfaces. In an embodiment, the base 106 may be formed as thin and/or may be formed with a varying or uniform hardness. For instance, the base 106 may be formed as a varying base 306 such that the middle of the varying base 306 (being the middle of the cross axis 131) is less hard than the edges (of the varying base 306 in the cross axis 131). This varying may be accomplished by forming the base 106 by molding such that it generates a varying base 306 with a middle (along the cross axis 131) being thinner (having less material) than the edges (of the varying base 306 in the cross axis 131). In another embodiment, the varying may be accomplished by removing, perhaps by cutting portions of the base 106 to make the base 106 a varying base with a middle (along the cross axis 131) being thinner (having less material) than the edges (of the varying base 306 in the cross axis 131). In another embodiment, the base 106 may be composed of different materials along the cross axis 131, making the base a varying base 306, such that the middle of the varying base 306 (along the cross axis 131) is softer than the edges (of the varying base 306 in the cross axis 131).

Step 906 is forming a balance rib 118. The balance rib 118 may be an elongated member and may be manufactured using any standard manufacturing methods, and from any materials known in the art that are sufficient to at least restrict, to some extent, the motion of the base 106. In an embodiment, the balance rib 118 may have a centerline 198 representing the center of the longest length of the balance rib 118 if the balance rib 118 is symmetrical along this length in at least one axis, for instance, symmetrical in the cross axis 131 about the centerline 198. The balance rib 118 may have varying thickness around the centerline 198 along the length of the centerline 198. For instance, in an embodiment, a thickness of at least one terminal end of the balance rib 118 in the cross axis 131 about the center line 198 may be greater than a thickness of a middle portion of the balance rib 197 in the cross axis 131 about the center line 198. In another embodiment, a thickness of at least one terminal end of the balance rib 118 in the cross axis 131 about the center line 198 may be less than a thickness of a middle portion of the balance rib 197 in the cross axis 131 about the center line 198.

Step 908 is coupling the balance rib 118 to the base 106. The balance rib 118 may be coupled to the base at a middle position of the base in the cross axis 131, perhaps with the elongated portion along or substantially along the flow axis 141. In an embodiment in which the base 106 has fins 108a and 108b coupled to the base 106 or will have fins 108a and 108b coupled to the base 106, the balance rib 118 may be coupled to the base 106 between the coupled fins 108a and 108b, perhaps coupled between the fins 108a and 108b along the cross axis 131, and also perhaps coupled equidistant from a position for coupling or coupled to the first fin 108a and a different position for coupling or coupled to the second fin 108b along the cross axis 131. The assembly formed when the balance rib 118 is coupled to the base 106 (or varying base 306) may be considered a balanced base assembly of a fin sensor 102. In an embodiment, the balance rib 118 may be coupled to the fin sensor 102 such that the centerline 198 is parallel or substantially parallel to a flow axis 141. In an embodiment, the balance rib 118 may have uniform thickness about the centerline 198 along the flow axis 141. In another embodiment, the balance rib 118 may have varying thickness along the flow axis 141, about the centerline 198 in the cross axis 131. For instance, in an embodiment, a thickness in the cross axis 131 of at least one terminal end of the balance rib 118 about the center line 198 may be greater than a thickness in the cross axis 131 of a middle portion of the balance rib 197 about the center line 198. For instance, in an embodiment, a thickness of at least one terminal end of the balance rib 118 in the cross axis 131 about the center line 198 may be less than a thickness of a middle portion of the balance rib 197 in the cross axis 131 about the center line 198.

Step 910 is forming at least one fin coupler (e.g. the first and second fin couplers 120a and/or 120b). The manufacturing methods for making elements such as the fin coupler are well-known in the art, for instance molding, extrusion, and other methods. The fin couplers may be formed of, for instance metal or composite. The at least one fin coupler may be formed in a variety of shapes, for instance, as rods, strips, or brace bars. In an embodiment, the at least one fin coupler may be formed with the fins 108a and 108b as a single piece, negating a need for a separate step of forming the fins 108a and 108b (as in Step 702) and/or a separate step of coupling the at least one fin coupler to the fins 108a and 108b. In an embodiment, the at least one fin coupler may be formed with one or more coupling elements configured to more easily and/or more effectively couple the at least one fin coupler to the fins 108a and 108b, for instance, one or both terminal ends of the at least one fin coupler. In another embodiment, the one or more of the fins 108a and 108b may be formed with coupling elements to more easily and/or more effectively couple the at least one fin coupler to the fins 108a and 108b. In still another embodiment, both the at least one fin coupler and the fins 108a and 108b may each have corresponding or complementary coupling elements to couple the at least one fin coupler to the fins 108a and 108b. In an embodiment, the at least one fin coupler may be two, three, four, five, six, or any other number of fin couplers.

Step 912 is coupling the at least one fin coupler to the first and second fin 108a and 108b. In embodiments in which one or more of the fins 108a and 108b and the at least one fin coupler have coupling elements, the at least one fin coupler and the fins 108a and 108b may be coupled at and/or by the coupling elements. Any method of coupling is considered, for instance, welding, brazing, soldering, adhesive bonding, plastic molding or melting, complementary physical or mechanical connectors, and the like.

Step 914 is coupling the fins 108a and 108b to the base 106. The fins 108a and 108b may be coupled to the base 106 in any manner, for instance, being formed together by molding, being coupled by adhesive bonding, welding or brazing, and other known methods in the art. In an embodiment, the base 106 has apertures through which fin protrusions 114a and 114b may protrude, and coupling established by standard coupling methods, such as, adhesive bonding, welding, and brazing.

Step 916 is optionally forming a fin sensor 102 by coupling the balanced base assembly to the fins 108a and 108b (perhaps with the balance rib 118 between the fins 108a and 108b on the base 106), transducers 104a-c, a meter electronics 112, and/or a base coupler 116. In an embodiment, the fin protrusions 114a and 114b may have segments, the segments perhaps each protruding through apertures in the base 106 when the fin sensor 302 is assembled. In an embodiment, the transducers 104a-c may be coupled to the fin protrusions 114a and 114b. The fin protrusions 114a and 114b may have different segments for coupling transducers. For instance, in an embodiment each of fin protrusions 114a and 114b may have three segments, the segments perhaps having complementary faces that oppose one another between the fin protrusions 114a and 114b. Each of the transducers 104a-c may be coupled to one of the corresponding segments of the fin protrusions 114a and 114b (the corresponding segments perhaps facing one another in the cross axis 131). In this embodiment, the three transducers 104a-c may be aligned with one another in the flow axis 141 (at least, when the fin sensor 102 is not operating). In this embodiment, the transducers 104a-c may be coupled to the fins 108a and 108b in positions situated on the side of the base 106 that opposes the side of the base 106 that has the portions of the fins 108a and 108b that are immersed.

The specification contemplates alternative orders of these steps, including all of those that are reasonable given the necessary order of certain steps. For instance, the steps in which the fin couplers 120a and 120b are coupled to the fins 108a and 108b and the fins 108a and 108b are coupled to the base 106 may be conducted in any order with respect to one another. Also, the balanced base assembly may be formed before, during, or after the fin coupler assembly is formed.

In an embodiment, each of the steps of the method shown in FIG. 9 is a distinct step. In another embodiment, although depicted as distinct steps in FIG. 9, steps 902-916 may not be distinct steps. In other embodiments, the method shown in FIG. 9 may not have all of the above steps and/or may have other steps in addition to or instead of those listed above. The steps of the method shown in FIG. 9 may be performed in another order. Subsets of the steps listed above as part of the method shown in FIG. 9 may be used to form their own method. The steps of method 900 may be repeated in any combination and order any number of times, for instance, continuously looping in order to maintain surveillance.

### Comparisons

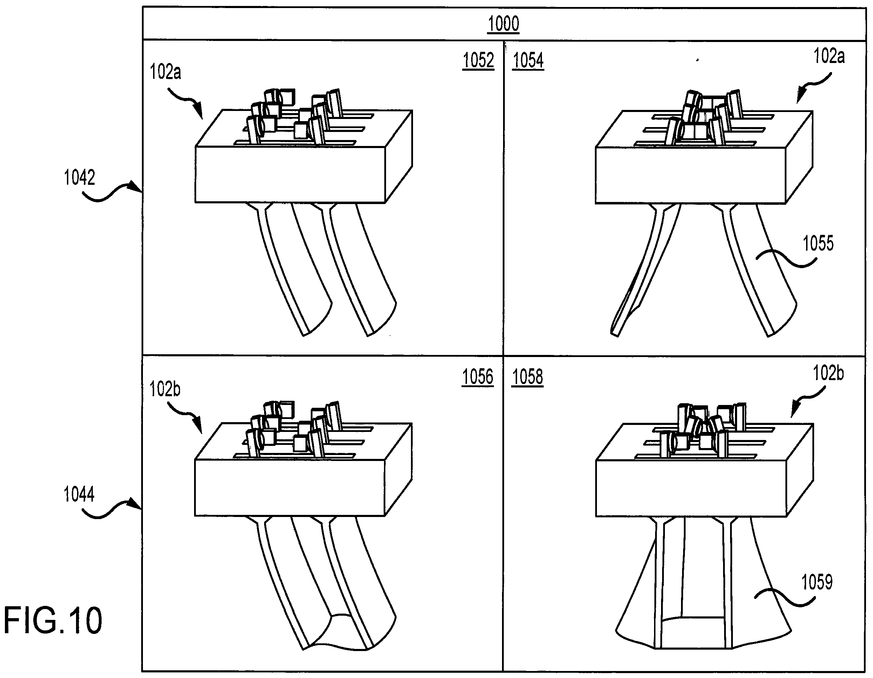

FIGs. 10-11 show comparisons explaining certain effects of embodiments of Applicant's features presented in this Specification.

**FIG. 10** shows a comparison 1000 of embodiments of fin sensor 102 with and without fin couplers 120a and 120b driven in In-Phase (IP) modes and Out-Of-Phase (OOP) modes. Fin sensors 102a and 102b are embodiments of fin sensor 102 without and with fin couplers 120a and 120b, respectively. The comparison 1000 has a first row 1042, a second row 1044, a first image 1052, a second image 1054, a third image 1056, and a fourth image 1058.

The first row 1042 is a row of images representing fin sensor 102a without fin couplers 120a and 120b, the first row 1042 having the first image 1052 and the second image 1054. The first image 1052 shows an embodiment of a fin sensor 102a without fin couplers 120a and 120b, the fin sensor 102a driven in an in-phase mode. The second image 1054 shows an embodiment of the fin sensor 102a driven in an out-of-phase mode. It can be seen that, at point 1055, the out of phase mode fins show little curl, essentially remaining flat. It can be appreciated that, there is little frequency separation between the in-phase mode and the out-of-phase modes, as both are driven at the same force, with their response frequencies approaching substantially the same values. This lack of separation between the vibrational modes may result in coupling of the drive mode and natural mode and make impure the intended excitation shape such that calibration and measurement error may result.

The second row 1044 is a row of images representing fin sensor 102b with fin couplers 120a and 120b, the second row 1044 having the third image 1056 and the fourth image 1058. The third image 1056 shows an embodiment of the fin sensor 102b with fin couplers 120a and 120b, the fin sensor 102b driven in an in-phase mode. The second image 1054 shows an embodiment of the fin sensor 102b, having fin couplers 120a and 120b, driven in an out-of-phase mode. It can be seen that, at point 1059, the out-of-phase mode shows considerable curl, generating greater amplitude, frequency, and phase resolution. This generates considerable frequency separation between the in-phase mode and the out-of-phase mode, as both are driven at the same force, with the fin sensor 102b in the out-of-phase mode generating a frequency that, in this embodiment, is 20% higher than the frequency generated by the in-phase mode. This frequency separation between the in-phase and out-of-phase modes may at least limit coupling between the in-phase mode and out-of-phase mode, potentially allowing for better measurement and calibration. The increased curling may allow the fin sensor 102b to better couple the fins to the flowing medium and induce Coriolis responses, perhaps similar to typical Coriolis mass flowmeters.

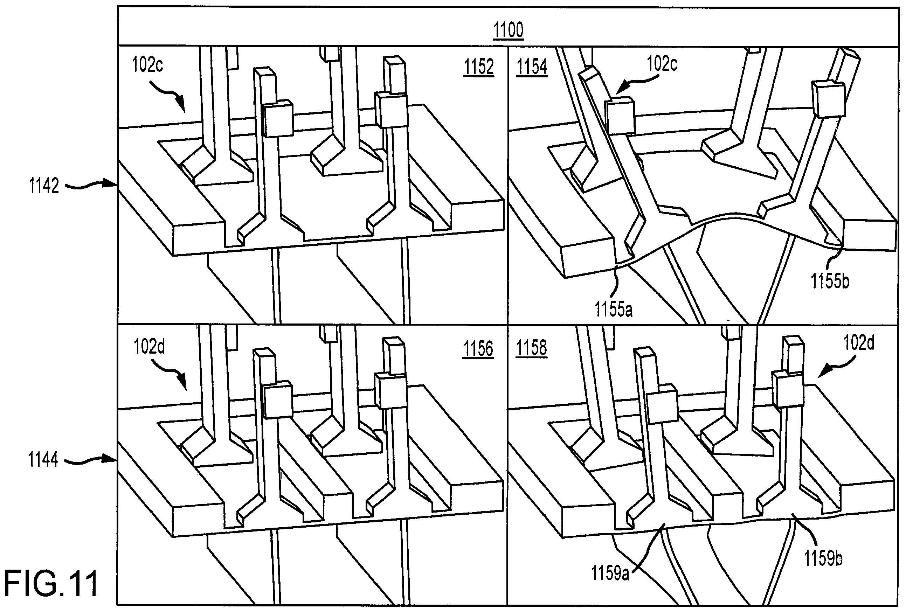

FIG. 11 shows a comparison 1100 of embodiments of fin sensor 102 with and without a balance rib 118 in undeformed and deformed positions. Fin sensors 102c and 102d are embodiments of fin sensor 102 with and without a balance rib 118, respectively. The comparison 1100 has a first row 1142, a second row 1144, a first image 1152, a second image 1154, a third image 1156, and a fourth image 1158.

The first row 1142 is a row of images representing fin sensor 102c without the balance rib 118, the first row 1142 having the first image 1152 and the second image 1154. The first image 1152 shows an embodiment of a fin sensor 102c without the balance rib 118, the fin sensor 102c in an undeformed position. The second image 1154 shows an embodiment of the fin sensor 102c without the balance rib 118 in a deformed position. It can be seen that, at points 1155a and 1155b, the axes of rotation of the fins 108a and 108b are at the edges of the base 106. It can be appreciated that, the resulting motion of the sensor assembly will generate net motion in the direction vertical axis 151, through the sensor assembly, causing an imbalance and moving the sensor assembly relative to the support structure to which the fin sensor 102c is coupled.

The second row 1144 is a row of images representing fin sensor 102d with the balance rib 118, the second row 1144 having the third image 1156 and the fourth image 1158. The third image 1156 shows an embodiment of the fin sensor 102d with the balance rib 118, the fin sensor 102d in an undeformed position. The fourth image 1154 shows an embodiment of the fin sensor 102d, having the balance rib 118, the fin sensor 102d in a deformed position. It can be seen that, at points 1159a and 1159b, that the axes of rotation of the fins 108a and 108b are at the couplings of the fins 108a and 108b to the base 106. It can be appreciated that, the resulting motion of the fins 108a and 108b will generate no net motion in a vertical axis 151, through the middle of the sensor assembly, providing balance and not moving the sensor assembly relative to the support structure to which the fin sensor 102d is coupled. In an embodiment, this may provide no net motion of the fins (or tines) in the vertical direction. It can be appreciated that, in some embodiments, fins 108a and 108b of the fin sensor 102d may rotate about the respective center points of the fins 108a and 108b (at 1159a and 1159b, respectively).

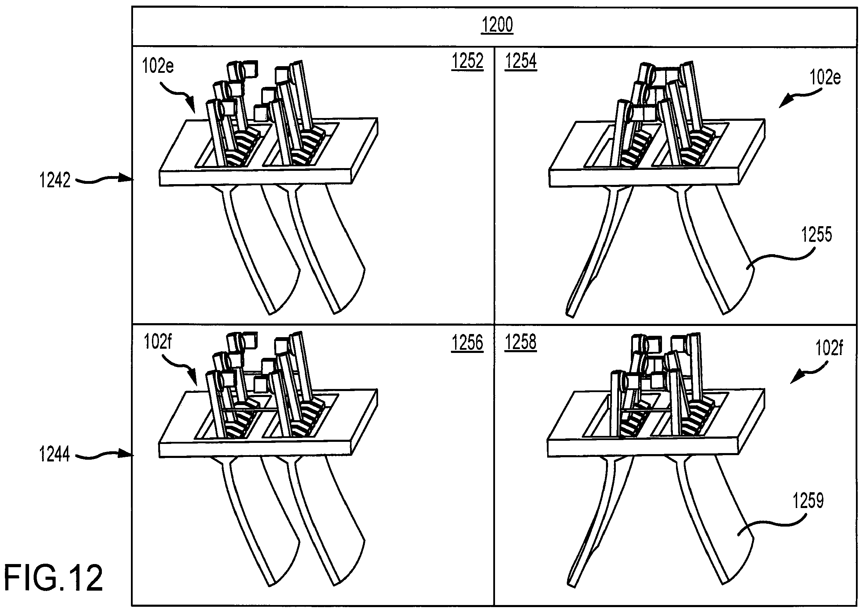

**FIG. 12** shows a comparison 1200 of embodiments of fin sensor 102 with and without fin couplers 120a and 120b on the external side 344 of a base 106 driven in In-Phase (IP) modes and Out-Of-Phase (OOP) modes. Fin sensors 102e and 102f are embodiments of fin sensor 102 without and with fin couplers 120a and 120b, respectively. The comparison 1200 has a first row 1242, a second row 1244, a first image 1252, a second image 1254, a third image 1256, and a fourth image 1258.

The first row 1242 is a row of images representing fin sensors 102e without fin couplers 120a and 120b, the first row 1242 having the first image 1252 and the second image 1254. The first image 1252 shows an embodiment of a fin sensor 102a without fin couplers 120a and 120b, the fin sensor 102a driven in an in-phase mode. The second image 1254 shows an embodiment of the fin sensor 102a driven in an out-of-phase mode. It can be seen that, at point 1255, the out of phase mode fins show little curl, essentially remaining flat. It can be appreciated that, there is little frequency separation between the in-phase mode and the out-of-phase modes, as both are driven at the same force, with their response frequencies approaching substantially the same values. This lack of separation between the vibrational modes may result in coupling of the drive mode and natural mode and make impure the intended excitation shape such that calibration and measurement error may result.

The second row 1244 is a row of images representing fin sensors 102b with fin couplers 120a and 120b, the second row 1244 having the third image 1256 and the fourth image 1258. The third image 1256 shows an embodiment of the fin sensor 102b with fin couplers 120a and 120b, the fin sensor 102b driven in an in-phase mode. The second image 1254 shows an embodiment of the fin sensor 102b, having fin couplers 120a and 120b, driven in an out-of-phase mode. This generates considerable frequency separation between the in-phase mode and the out-of-phase mode, as both are driven at the same force, with the fin sensor 102b in the out-of-phase mode generating a frequency that, in this embodiment, is 20% higher than the frequency generated by the in-phase mode. This frequency separation between the in-phase and out-of-phase modes may at least limit coupling between the in-phase-mode and out-of-phase mode, potentially allowing for better measurement and calibration. The increased curling may allow the fin sensor 102b to better couple the fins to the flowing medium and induce Coriolis responses, perhaps similar to typical Coriolis mass flowmeters.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description. When the statement "and/or" is used it should be construed that embodiments in which one or more of "and" and "or" apply are fully contemplated and disclosed for the purposes of this specification.

Thus, although specific embodiments are described herein for illustrative purposes, various equivalent modifications are possible within the scope of the present description, as those skilled in the relevant art will recognize. The teachings provided herein can be applied to other methods and apparatuses for determining a vibratory response parameter of a vibratory element, and not just to the embodiments described above and shown in the accompanying figures. Accordingly, the scope of the embodiments described above should be determined from the following claims.

## Claims

1. A fin sensor (102) with a base (106) and a balance rib (118), the base (106) coupled to a first fin (108a) and a second fin (108b), the fin sensor (102) further having at least two transducers (104a and 104b) coupled to the fins (108a and 108b), the balance rib (118) being coupled to one or more of the base (106) and a base coupler (116), and the balance rib (118) having a thickness in the cross axis (131) of the balance rib (118) on one or more of a downstream (145) end of the balance rib (118) and an upstream (143) end of the balance rib (118) that is less than a thickness in the cross axis (131) of a middle portion of the balance rib (118).

2. A fin sensor (102) as claimed in claim 1, the balance rib (118) having a thickness in the cross axis (131) of the balance rib (118) on one or more of a downstream (145) end of the balance rib (118) and an upstream (143) end of the balance rib (118) that is greater than a thickness in the cross axis (131) of a middle portion of the balance rib (118).

3. A fin sensor (102) as claimed in claim 2, further comprising at least one fin coupler (120a and/or 120b), the at least one fin coupler (120a and/or 120b) coupled to the fins (108a and 108b).

4. A fin sensor (102) as claimed in claims 2 to 3, the base (106) being a varying base (306) that has varying hardness.

5. A fin sensor (102) as claimed in claim 4, the varying base (306) having a softer portion in a middle of the varying base (306) and harder portions on edges of the varying base (306), the middle and the edges being the middle and edges of the varying base (306) in a cross axis (131).

6. A method of making a balanced base assembly, comprising:
forming a base (106), wherein the base (106) is formed as a varying base (306);
forming a balance rib (118); and
coupling the balance rib (118) to one or more of the base (106) and a base coupler (116).

7. A method as claimed in claim 6, wherein the varying base (306) is formed by varying a thickness of the varying base (306) in molding or by cutting away a portion of the varying base (306).

8. A method as claimed in claims 6 and 7, wherein the thickness is varied such that a middle of the varying base (306) is thinner than the edges of the varying base (306) in a cross axis (131).

9. A method as claimed in claims 6 to 8, wherein the varying base (306) is formed by varying the material from which the varying base (306) is composed, at least along a cross axis (131).

10. A method of using a fin sensor (102) with a driving transducer (104b) to drive vibrations in a first fin (108a) and a second fin (108b), the first and second fin (108a and 108b) coupled to a base (106), the fin sensor (102) having at least one sensing transducer (104a) to receive response data, the method comprising at least partially restricting, by at least one fin coupler (120a and/or 120b), a motion of a first fin (108a) relative to a motion of a second fin (108b) comprising, at least partially restricting the motion of the base (106) with a balance rib (118).

11. A method of using a fin sensor (102) with a driving transducer (104b) to drive vibrations in a first fin (108a) and a second fin (108b), the first fin (108a) and the second fin (108b) coupled to a base (106), the fin sensor (102) having at least one sensing transducer (104a) to receive response data, the fin sensor (102) having a balance rib (118), the method comprising at least partially restricting, by the balance rib (118), the motion of the base (106).

12. A method as claimed in claim 11, the at least partially restricting, by the balance rib (118), the motion of the base (106) comprising at least partially restricting a motion of the base (106) in a vertical axis (151) along a middle portion of the base (106), the middle portion being a portion defined by the middle of a cross axis (131).

13. A method as claimed in claims 11 and 12, the at least partially restricting, by the balance rib (118), the motion of the base (106) comprising at least partially preventing a net motion of the fins (108a and 108b) in a vertical axis (151).

14. A method as claimed in claim 13, the at least partially restricting, by the balance rib (118), the motion of the base (106) comprising at least partially preventing a net motion of the fin sensor (102) in a vertical axis (151).

15. A method as claimed in claims 11 to 14, the at least partially restricting the motion of the base (106), comprising at least partially restricting the base (106) at a position between a position on the base (106) at which the first fin (108a) is coupled or is to be coupled and a different position on the base (106) at which the second fin (108b) is coupled or is to be coupled, on the cross axis (131).

16. A method as claimed in claims 11 to 15, the at least partially restricting the motion of the base (106) comprising at least partially restricting the motion of the base (106) at a position equidistant from the position and the different position on the cross axis (131).

17. A method as claimed in claims 11 to 16, the at least partially restricting the motion of the base (106) comprising at least partially restricting the motion of the base (106) at least along a linear portion of the base (106) that is parallel to a flow axis (141).
